# EUROPEAN PATENT APPLICATION

(11) **EP 4 664 995 A1**
(43) Date of publication of application: **17.12.2025**
(21) Application number: 23938745.9
(22) Date of filing: 26.05.2023
(51) Int. Cl.: H04W 36/18

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN)
(74) Representative: RGTH
(86) International application number: PCT/CN2023/096672
(87) International publication number: WO 2024/243746

(57) **Abstract**

Embodiments of the present application provide a wireless communication method and a device, capable of implementing uninterrupted roaming or seamless roaming of a Non-AP MLD between different AP MLDs (physical AP MLDs) within a logical AP MLD, thereby improving the roaming performance of the Non-AP MLD between different AP MLDs within the logical AP MLD. The wireless communication method is applied to a Non-AP MLD, and the Non-AP MLD roams between different AP MLDs (physical AP MLDs) within a logical AP MLD. The method comprises: the Non-AP MLD sends a first frame, wherein the first frame comprises a first field, and the first field is used for indicating that the first frame is used to add or delete a first-type link, or the first field is used for indicating that the first frame is used to add or delete a second-type link.

## Description

### TECHNICAL FIELD

Embodiments of the present disclosure relate to the field of communications, and in particular, to a wireless communication method and a device.

### BACKGROUND

In wireless local area network (WLAN) communications, in order to improve mobility performance of a station (STA), uninterrupted roaming of the STA is introduced. However, uninterrupted roaming under multi-link device (MLD) scenarios has not been thoroughly investigated or discussed.

### SUMMARY

The embodiments of the present disclosure provide a wireless communication method and a device, which may achieve uninterrupted roaming or seamless roaming of a non-access point multi-link device (Non-AP MLD) between different access point multi-link devices (AP MLDs) (i.e., physical AP MLDs) within a logical AP MLD, and thereby improve roaming performance of the Non-AP MLD between different AP MLDs (i.e., physical AP MLDs) within the logical AP MLD.

In a first aspect, a wireless communication method is provided, which is applied to a Non-AP MLD. The Non-AP MLD roams between different AP MLDs within a logical AP MLD, and the method includes:
transmitting, by the Non-AP MLD, a first frame;
where the first frame includes a first field, and the first field is used for indicating that the first frame is used for adding or deleting a first-type link, or the first field is used for indicating that the first frame is used for adding or deleting a second-type link.

In a second aspect, a wireless communication method is provided, which is applied to an AP MLD. The AP MLD belongs to a logical AP MLD, and the method includes:
receiving, by the AP MLD, a first frame transmitted by a Non-AP MLD;
where the Non-AP MLD roams between different AP MLDs within the logical AP MLD; and;
the first frame comprises a first field, and the first field is used for indicating that the first frame is used for adding or deleting a first-type link, or the first field is used for indicating that the first frame is used for adding or deleting a second-type link.

In a third aspect, a STA is provided, which is configured to perform the method in the first aspect.

Specifically, the STA includes a functional module configured to perform the method in the first aspect.

In a fourth aspect, an AP is provided, which is configured to perform the method in the second aspect.

Specifically, the AP includes a functional module configured to perform the method in the second aspect.

In a fifth aspect, a STA is provided, which includes a processor and a memory; the memory is configured to store a computer program, and the processor is configured to call the computer program stored in the memory and run the computer program, to enable the STA to perform the method in the first aspect.

In a sixth aspect, an AP is provided, which includes a processor and a memory; the memory is configured to store a computer program, and the processor is configured to call the computer program stored in the memory and run the computer program, to enable the AP to perform the method in the second aspect.

In a seventh aspect, an apparatus is provided, which is configured to implement the method in any one of the first aspect and the second aspect.

Specifically, the apparatus includes: a processor, configured to call a computer program from a memory and run the computer program, to enable a device equipped with the apparatus to perform the method in any one of the first aspect and the second aspect.

In an eighth aspect, a computer-readable storage medium is provided, which is configured to store a computer program. The computer program enables a computer to perform the method in any one of the first aspect and the second aspect.

In a ninth aspect, a computer program product is provided, which includes computer program instructions. The computer program instructions enable a computer to perform the method in any one of the first aspect and the second aspect.

In a tenth aspect, a computer program is provided. The computer program, when run on a computer, enables the computer to perform the method in any one of the first aspect and the second aspect.

Through the above technical solutions, in a case where the Non-AP MLD roams between different AP MLDs (i.e., physical AP MLDs) within the logical AP MLD, the Non-AP MLD may add or delete the first-type link based on the first field in the first frame transmitted by the AP MLD, or the Non-AP MLD may add or delete the second-type link based on the first field in the first frame transmitted by the AP MLD, which may achieve uninterrupted roaming or seamless roaming of the Non-AP MLD between different AP MLDs (i.e., physical AP MLDs) within the logical AP MLD, and thereby improve roaming performance of the Non-AP MLD between different AP MLDs (i.e., physical AP MLDs) within the logical AP MLD.

### BRIEF DESCRIPTION OF THE DRAWINGS

FIG. 1 is a schematic diagram of a communication system architecture to which embodiments of the present disclosure are applicable.
FIG. 2 is a schematic diagram of NAV distribution provided in the present disclosure.
FIG. 3 is a schematic diagram of establishing multiple links between an AP MLD and a Non-AP MLD provided in the present disclosure.
FIG. 4 is a schematic diagram of a reconfiguration operation type provided in the present disclosure.
FIG. 5 is a schematic diagram of a logical AP MLD composed of multiple non-collocated APs provided in the present disclosure.
FIG. 6 is a schematic diagram of a roaming operation of an MLD level provided in the present disclosure.
FIG. 7 is a schematic diagram of a roaming operation of a link level provided in the present disclosure.
FIG. 8 is a schematic diagram of link switching during roaming provided in the present disclosure.
FIG. 9 is a schematic diagram of a multi-AP coordination transmission provided in the present disclosure.
FIG. 10 is a schematic flowchart of a wireless communication method provided according to embodiments of the present disclosure.
FIGS. 11 to 16 are schematic diagrams of deleting or adding a link during roaming provided according to embodiments of the present disclosure.
FIG. 17 is a schematic diagram of a multi-link operation update request frame provided according to embodiments of the present disclosure.
FIG. 18 is a schematic diagram of a frame for adding or deleting a roaming link provided according to embodiments of the present disclosure.
FIG. 19 is a schematic diagram of another multi-link operation update request frame provided according to embodiments of the present disclosure.
FIG. 20 is a schematic diagram of STA roaming provided according to embodiments of the present disclosure.
FIG. 21 is a schematic diagram of another STA roaming provided according to embodiments of the present disclosure.
FIG. 22 is a schematic diagram of yet another STA roaming provided according to embodiments of the present disclosure.
FIG. 23 is a schematic block diagram of a Non-AP MLD provided according to embodiments of the present disclosure.
FIG. 24 is a schematic block diagram of an AP MLD provided according to embodiments of the present disclosure.
FIG. 25 is a schematic block diagram of a communication device provided according to embodiments of the present disclosure.
FIG. 26 is a schematic block diagram of an apparatus provided according to embodiments of the present disclosure.
FIG. 27 is a schematic block diagram of a communication system provided according to embodiments of the present disclosure.

### DETAILED DESCRIPTION

The technical solutions in the embodiments of the present disclosure will be described below in conjunction with the drawings in the embodiments of the present disclosure. It is apparent that the described embodiments are some embodiments of the present disclosure, rather than all embodiments of the present disclosure. Based on the embodiments of the present disclosure, all other embodiments obtained by those of ordinary skills in the art without paying creative efforts shall fall within the protection scope of the present disclosure.

The technical solutions in the embodiments of the present disclosure may be applied to various communication systems, such as a wireless local area network (WLAN), a wireless fidelity (WiFi), or other communication systems.

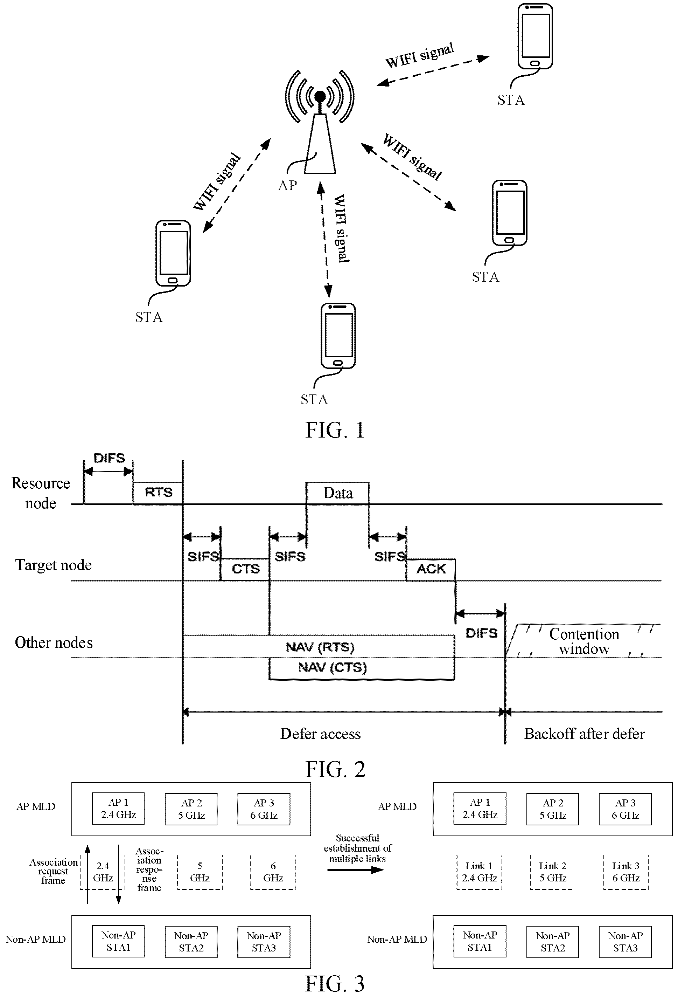

Referring to FIG. 1, a schematic diagram of a wireless communication system provided in an embodiment of the present disclosure is illustrated. As illustrated in FIG. 1, the wireless communication system may include: an access point (AP) and stations (STAs).

In some scenarios, the AP may be referred to as an AP STA. That is, in a sense, the AP is also a kind of STA. In some scenarios, the STA may be referred to as a Non-AP STA.

In some embodiments, the STAs may include the AP STA and the Non-AP STA. The communication in the communication system may be communication between the AP and the Non-AP STA, or communication between the Non-AP STAs, or communication between the STA and a peer STA. The peer STA may refer to a device for peer communication with the STA. For example, the peer STA may be the AP or the Non-AP STA.

The AP is equivalent to a bridge connecting a wired network and a wireless network, and the main function of the AP is to connect various wireless network clients together and then connect the wireless network to Ethernet. An AP device may be a terminal device (e.g., a mobile phone) with a wireless fidelity (WiFi) chip or a network device (e.g., a router) with a WiFi chip.

It should be understood that a role of the STA in the communication system is not absolute. For example, in some scenarios, in a case where the mobile phone is connected to the router, the mobile phone is a Non-AP STA. In a case where the mobile phone serves as a hotspot for other mobile phones, the mobile phone plays the role of an AP.

The AP and Non-AP STA may be devices used in the Internet of Vehicles, or Internet of Things (IoT) nodes or sensors in the IoT, or smart cameras, smart remote controls, smart water meters or smart electricity meters in a smart home, or sensors in a smart city.

In some embodiments, the Non-AP STA may support the 802.1 The standard. The Non-AP STA may also support various current and future WLAN standards of the 802.11 family, such as 802.11ax, 802.11ac, 802.11n, 802.11g, 802.11b and 802.11a.

In some embodiments, the AP may be a device that supports the 802.11be standard. The AP may also be a device that supports various current and future WLAN standards of the 802.11 family, such as 802.11ax, 802.11ac, 802.11n, 802.11g, 802.11b, and 802.11a.

In the embodiments of the present disclosure, the STA may be a mobile phone, a pad, a computer, a virtual reality (VR) device, an augmented reality (AR) device, a wireless device in industrial control, a set-top box, a wireless device in self driving, an in-vehicle communication device, a wireless device in remote medical, a wireless device in smart grid, a wireless device in transportation safety, a wireless device in a smart city or a smart home, a wireless communication chip, an application specific integrated circuit (ASIC), or a system on chip (SOC), each of which supports WLAN/WIFI technology.

The frequency bands supported by the WLAN technology may include but are not limited to, low frequency bands (e.g., 2.4 GHz, 5 GHz, or 6 GHz) and high frequency bands (e.g., 45 GHz or 60 GHz).

There are one or more links between the STA and the AP. In some embodiments, the STA and the AP support multi-band communications. For example, the STA and the AP communicate simultaneously in the frequency bands of 2.4 GHz, 5 GHz, 6 GHz, 45 GHz, and 60 GHz, or communicate simultaneously on different channels in the same frequency band (or different frequency bands), which improves communication throughput and/or reliability between devices. This type of device generally refers to as a multi-band device or a multi-link device (MLD), and sometimes also refers to as a multi-link entity or a multi-band entity. The multi-link device may be an access point device or a station device. In a case where the multi-link device is the access point device, the multi-link device includes one or more APs; in a case where the multi-link device is the station device, the multi-link device includes one or more Non-AP STAs.

The multi-link device including one or more APs may be referred to as an AP MLD, and the multi-link device including one or more Non-AP STAs may be referred to as a Non-AP MLD.

In the embodiments of the present disclosure, the AP may include multiple APs, the Non-AP may include multiple STAs, multiple links may be formed between the APs within the AP and the STAs within the Non-AP, and data communication may be performed between an AP within the AP and a corresponding STA within the Non-AP via a corresponding link.

The AP is a device deployed in the WLAN to provide a wireless communication function for the STA. The STA may include: a user equipment (UE), an access terminal, a user unit, a user station, a mobile station, a mobile console, a remote station, a remote terminal, a mobile device, a wireless communication device, a user agent, or a user apparatus. Optionally, the station (STA) may also be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, an in-vehicle device, or a wearable device, which are not limited in the embodiments of the present disclosure.

Optionally, both the STA and the AP support the IEEE 802.11 standard.

It should be understood that the terms "system" and "network" are often used interchangeably herein. The term "and/or" used herein is only an association relationship to describe associated objects, which indicates that there may be three kinds of relationships. For example, A and/or B may represent three situations that: A exists alone, both A and B exist, and B exists alone. In addition, the character "/" used herein generally indicates that associated objects before and after the character "/" are in an "or" relationship.

It should be understood that the "indicate" mentioned in the embodiments of the present disclosure may be a direct indication or an indirect indication, or may represent that there is an association relationship. For example, A indicating B may mean that A directly indicates B, for example, that B may be obtained through A; alternatively, A indicating B may mean that A indirectly indicates B, for example, that A indicates C, and B may be obtained through C; alternatively, A indicating B may mean that there is an association relationship between A and B.

Terms used in the implementations of the present disclosure are only used to explain specific embodiments of the present disclosure and are not intended to limit the present disclosure. The terms such as "first", "second", "third", "fourth" in the specification, claims and drawings of the present disclosure are used to distinguish different objects rather than to describe a specific order. In addition, the terms "includes", "comprises", and "have" and any variations thereof, are intended to cover a non-exclusive inclusion.

It should be understood that the "at least one or at least one of" mentioned in the embodiments of the present disclosure may represent "one or more". The "positive integer" mentioned in the embodiments of the present disclosure may represent "1, 2, 3, ..., or another value", the "non-negative integer" mentioned in the embodiments of the present disclosure may represent "0, 1, 2, 3, ..., or another value", and the "integer" mentioned in the embodiments of the present disclosure may represent "..., -3, -2, -1, 0, 1, 2, 3, ..., or another value", which may be replaced with any possible value based on the requirements of the embodiments.

It should be understood that figures and/or tables illustrated in the embodiments of the present disclosure are illustrative purposes only. Specifically, in some cases, some of information included in the figures and/or the tables illustrated in the embodiments of the present disclosure may independently constitute optional embodiments. For example, each row or each column in a table may independently constitute an optional embodiment, which is not limited in the present disclosure.

In the description of the embodiments of the present disclosure, the term "correspond" may mean that there is a direct correspondence or an indirect correspondence between the two, or may mean that there is an association relationship between the two, or may mean a relationship of indicating and being indicated, or configuring and being configured, or the like.

In the embodiments of the present disclosure, "pre-defined" or "pre-configured" may be implemented by pre-storing corresponding codes, tables or other methods that may be used to indicate related information in devices (e.g., including the STA and the network device), and its specific implementation is not limited in the present disclosure. For example, "pre-defined" may refer to what is defined in the protocol.

In the embodiments of the present disclosure, the term "protocol" may refer to standard protocols in the field of communications, which may include, for example, a WiFi protocol and related protocols applied in a future WiFi communication system, and the present application does not limit this.

To facilitate understanding of the embodiments of the present disclosure, enhanced distributed channel access (EDCA) related to the present disclosure will be described.

In a case where the STA detects that a channel changes from busy to idle during clear channel assessment (CCA), the STA needs to continue to detect whether the channel remains idle within a distributed (coordination function) interframe space (DIFS) time. Then, in response to that a value of a current random backoff counter is 0, the STA obtains channel access right and immediately performs transmission, and resets the value of the random backoff counter. Otherwise, the STA continues to detect whether the channel remains idle; in response to that the channel remains idle every time a slot is detected, the value of the random backoff counter of the STA is reduced by 1 until the value of the random backoff counter of the STA becomes 0, and then the STA obtains the channel access right and immediately performs transmission, and resets the value of the random backoff counter. In response to that another STA successfully contends for the channel first during the process, the value of the random backoff counter of the STA remains unchanged, and it is detected that the channel changes from busy to idle during the CCA next time, the value of the random backoff counter of the above station remains a previous value. For example, the distributed (coordination function) interframe space (DIFS) is larger than a short interframe space (SIFS).

To facilitate understanding of the embodiments of the present disclosure, network allocation vector (NAV) distribution related to the present disclosure will be described.

In a case where request to send (RTS)/clear to send (CTS) exchange or a CTS-to-self frame is a first frame for transmission, its duration field indicates a total duration of the transmission (i.e., used to set a NAV value to protect the channel).

In a case where a node needs to distribute NAV information, for instance, as illustrated in FIG. 2, to reserve a medium for transmission of a non-basic rate frame (which may not be heard by other nodes in a basic service set (BSS)), the node may first transmit a CTS frame (CTS-to-self) with a receiver address (RA) field equal to its own media access control (MAC) address if the node is a non-directional multi-gigabit (Non-DMG) STA, or the node may transmit a DMG CTS frame with the RA field equal to its own MAC address. A duration value in the CTS or DMG CTS frame protects the pending transmission, plus possibly an acknowledgment (Ack) frame.

A non-AP high efficiency STA (Non-AP HE STA) shall maintain two NAVs, and an HE AP may maintain two NAVs: an intra-BSS NAV and a basic NAV.

The intra-BSS NAV is updated by an intra-BSS physical layer protocol data unit (PPDU). The basic NAV is updated by an inter-BSS PPDU or a PPDU that cannot be classified as intra-BSS or inter-BSS.

For the HE STA that maintains two NAVs, in response to that the two NAV timers are 0, a virtual carrier sensing (CS) indicates that the medium is idle; and in response to that at least one of the two NVA timers is non-zero, the virtual CS indicates that the medium is busy.

That is, in a case where a PPDU is received, the station (STA) will update its corresponding NAV value.

To facilitate understanding of the embodiments of the present disclosure, the multi-link device (MLD) and multi-link operations related to the present disclosure will be described.

The AP and STA that have multi-link operation capabilities are the AP MLD and the Non-AP MLD, respectively. Multiple links may be established between the AP MLD and the Non-AP MLD on multiple different frequency bands/channels.

As illustrated in FIG. 3, three links are established between the AP MLD and the Non-AP MLD on frequency bands of 2.4 GHz, 5 GHz, and 6 GHz, which are referred to as Link 1, Link 2, and Link 3 respectively, and the three links may work simultaneously. AP 1 operating on Link 1 (2.4 GHz), AP 2 operating on Link 2 (5 GHz), and AP 3 operating on Link 3 (6 GHz) are referred to as affiliated access points (affiliated APs) of the AP MLD. Similarly, AP 1 operating on Link 1 (2.4 GHz), AP 2 operating on Link 2 (5 GHz), and AP 3 operating on Link 3 (6 GHz) are referred to as affiliated APs of the AP MLD. Similarly, Non-AP STA 1 operating on Link 1 (2.4 GHz), Non-AP STA 2 operating on Link 2 (5 GHz), and Non-AP STA 3 operating on Link 3 (6 GHz) are referred to as affiliated (Non-AP) STAs of the Non-AP MLD.

To facilitate understanding of the embodiments of the present disclosure, the Non-AP MLD adding/deleting link related to the present disclosure will be described.

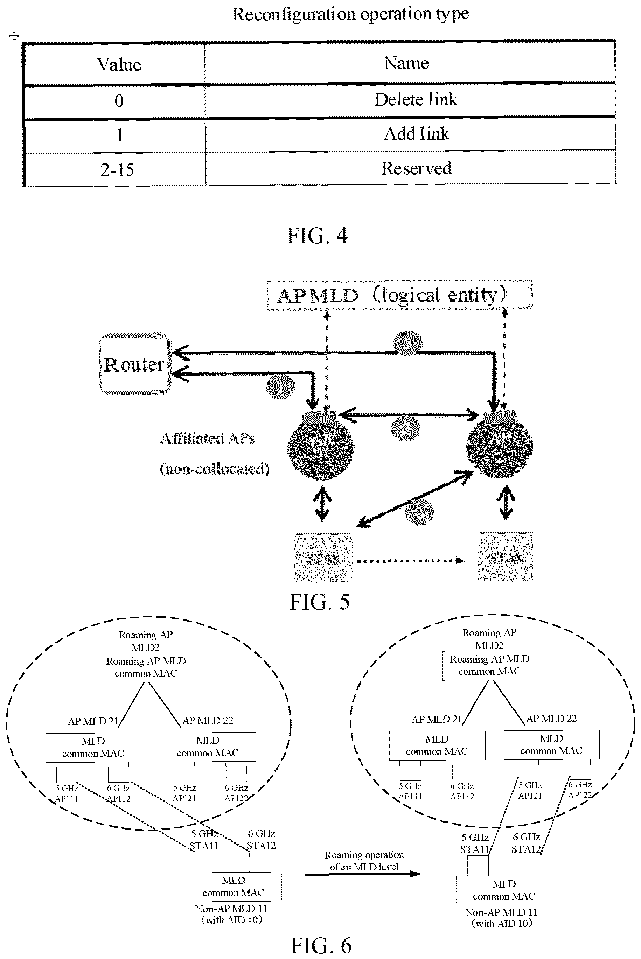

The Non-AP MLD performs add link and delete link operations via exchange of a multi-link operation update request frame and a multi-link operation update response frame. A type of add link/delete is added in a reconfiguration operation type field in a reconfiguration multi-link element carried in the frame, which is as illustrated in FIG. 4; in addition, parameter fields applied to a single link are added, which are non simultaneous transmit and receive (NSTR) link pair present, NSTR bitmap size, and NSTR indication bitmap.

To facilitate understanding of the embodiments of the present disclosure, a logic AP MLD composed of multiple non-collocated APs related to the present disclosure will be described.

Taking multiple non-collocated APs as one logical AP MLD entity; in a case where a STA connects to the AP MLD, the multiple non-collocated APs may be regarded as different affiliated APs of the AP MLD. Thus, a multi-link operation architecture is used to achieve that the AP MLD provides services for the STA by using different affiliated APs and adopting different links, thereby better achieving the uninterrupted roaming of the STA. As illustrated in FIG. 5, STA x connects to AP 1 and AP 2 using multiple links. When moved, the STA x disconnects a link connection with AP 1 without affecting a link connection with AP 2, so that a mobility support of the STA becomes better.

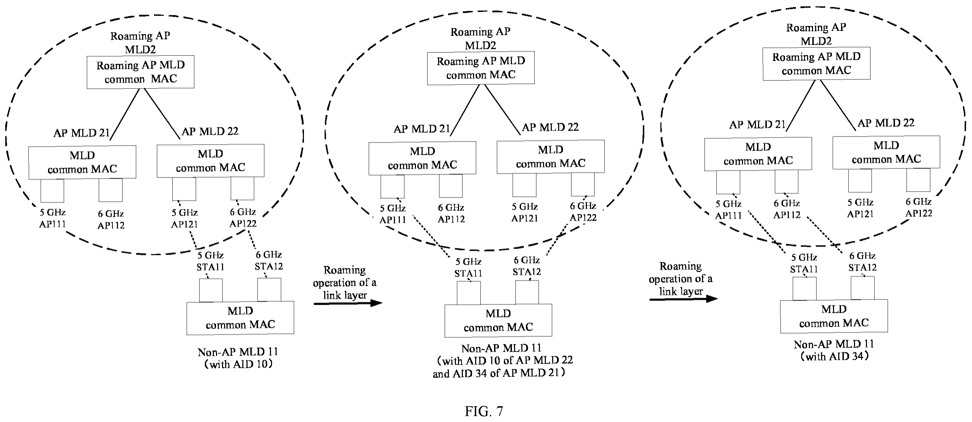

Specifically, the MLD on a physical device is built into a logical multi-link access point device composed of multiple physical devices. For example, MLD level roaming may be as illustrated in FIG. 6. As another example, link level roaming may be as illustrated in FIG. 7. For example, different links may be distinguished by roaming ID of the AP MLD (for distinguishing different AP MLDs under the roaming AP MLD) and link ID (for distinguishing different links under the same AP MLD).

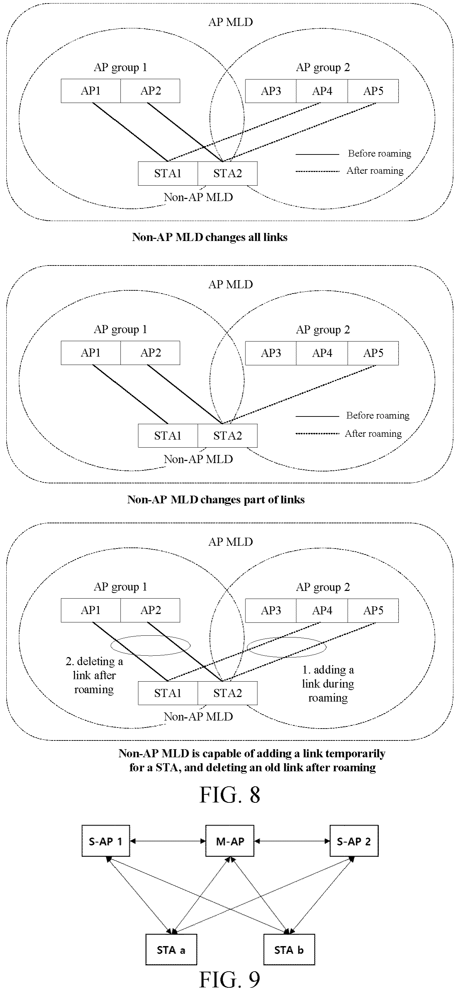

Specifically, for example, as illustrated in FIG. 8, during roaming, one or more new links may be added at a time, and after roaming is completed, old links may be deleted.

To facilitate understanding of the embodiments of the present disclosure, multi-AP coordination transmission related to the present disclosure will be described.

As illustrated in FIG. 9, multiple APs may form a multi-AP MLD coordination set (i.e., a multi-AP MLD candidate set), in which one AP serves as a master AP (M-AP) that manages and controls other slave APs (S-APs) in the multi-AP MLD candidate set via a wired link or a wireless link (which is also referred to as a backhaul link). Then, the APs in the multi-AP MLD candidate set may provide services for STAs (e.g., STA a and STA b) via coordination.

There are multiple manners for the multi-AP coordination, such as coordinated orthogonal frequency division multiple access (C-OFDMA), coordinated time division multiple access (C-TDMA), coordinated beamforming (C-BF), joint transmission (J-TX), coordinated spatial reuse (C-SR), and coordinated uplink multiple-user multiple input multiple output (C-UL MU MIMO).

To facilitate understanding of the technical solutions in the embodiments of the present disclosure, problems solved by the present disclosure will be described below.

At present, in the 802.11 series of standards, WiFi devices use a fast transition mechanism (i.e., a fast BSS transition (FT)) during roaming (i.e., moving from coverage of one BSS to coverage of another BSS). However, the fast transition mechanism cannot avoid link interruption during transition (the link interruption may last for more than 2 milliseconds).

In a scenario of multi-link device roaming, in a case where the logical AP MLD technology is used, the add link and delete link operations need to be performed, and the 11bn (ultra high reliability (UHR), Wi-Fi 8) protocol needs to be compatible with the 11be (extremely high throughput (EHT), Wi-Fi 7) protocol. Therefore, a link addition signaling and a link deletion signaling used for the logical AP MLD needs to be distinguished from a link addition signaling and a link deletion signaling of a single AP MLD (i.e., a Wi-Fi 7 device).

In addition, information that needs to be exchanged and synchronized between APs during station roaming is not specified in the logical AP MLD technology. In addition, how a station performs channel access and data transmission with two APs during roaming is not specified in the logical AP MLD technology.

Based on the above problems, multi-link device roaming solutions are proposed in the present disclosure, which may improve roaming performance of the multi-link device.

To facilitate understanding of the technical solutions in the embodiments of the present disclosure, the technical solutions of the present disclosure will be described in detail below via specific embodiments. The following related technologies may be, as optional solutions, arbitrarily combined with the technical solutions in the embodiments of the present disclosure, and those combined solutions all fall within the protection scope of the embodiments of the present disclosure. The embodiments of the present disclosure include at least part of following contents.

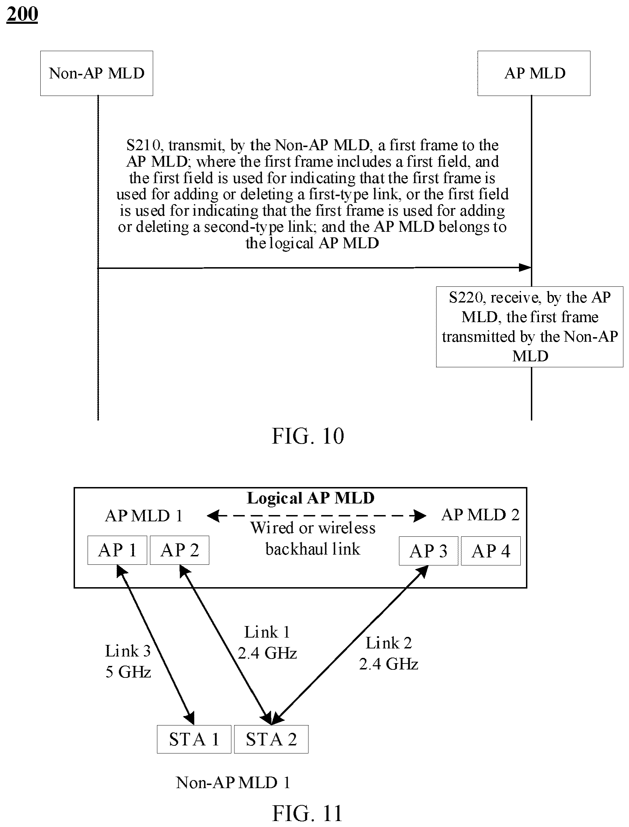

FIG. 10 is a schematic flowchart of a wireless communication method 200 according to embodiments of the present disclosure. As illustrated in FIG. 10, the method is applied to a Non-AP MLD, and the Non-AP MLD roams between different AP MLDs (physical AP MLDs) within a logical AP MLD. The wireless communication method 200 may include at least part of following contents:
S210, transmitting, by the Non-AP MLD, a first frame to an AP MLD; where the first frame includes a first field, and the first field is used for indicating that the first frame is used for adding or deleting a first-type link, or the first field is used for indicating that the first frame is used for adding or deleting a second-type link; and the AP MLD belongs to the logical AP MLD;
S220, receiving, by the AP MLD, the first frame transmitted by the Non-AP MLD.

It should be understood that, FIG. 10 illustrates the steps or operations of the wireless communication method 200, but these steps or operations are merely exemplary, and other operations or variations of the operations in FIG. 10 may further be performed in the embodiments of the present disclosure.

In the embodiments of the present disclosure, the "field" may also be referred to as a "field" or a "subfield". A single field may occupy one or more bytes (or octets), or a single field may occupy one or more bits or bits.

In the embodiments of the present disclosure, a single logical AP MLD may include multiple physical AP MLDs. For example, the logical AP MLD consists of multiple non-collocated physical AP MLDs.

In the embodiments of the present disclosure, in a scenario that an AP MLD to which a link (e.g., Link 1) on that a frame for adding or deleting a link is transmitted belongs is the same as an AP MLD to which a link (e.g., Link 2) to be added or deleted belongs, the link (i.e., Link 1) may be the first-type link. Specifically, for example, the first-type link may also be referred to as a local link; that is, in a scenario that the AP MLD to which the link (e.g., Link 1) that transmits a frame for adding or deleting a link belongs is the same as the AP MLD to which the link (e.g., Link 2) to be added or deleted belongs, the link (i.e., Link 1) is referred as the local link (e.g., 802.11be links are all local links).

In the embodiments of the present disclosure, in a scenario that the AP MLD to which the link (e.g., Link 1) on that a frame for adding or deleting a link is transmitted belongs is the same as the AP MLD to which the link (e.g., Link 2) to be added or deleted belongs, the link (i.e., Link 1) may be the second-type link. Specifically, for example, the second-type link may also be referred to as a roaming link; that is, in a scenario that the AP MLD to which the link (e.g., Link 1) on that a frame for adding or deleting a link is transmitted belongs is the same as the AP MLD to which the link (e.g., Link 2) to be added or deleted belongs, the link (i.e., Link 1) is referred to as the roaming link.

Specifically, for example, in a case where the link to be added or deleted is the roaming link, backend information interaction between AP MLDs within the logical AP MLD is triggered.

In some embodiments, during roaming of the Non-AP MLD between different AP MLDs within the logical AP MLD, the Non-AP MLD performs link switching in a first manner or a second manner; the first manner is a manner in which a target link is added first and then a source link is deleted, and the second manner is a manner in which a source link is deleted first and then a target link is added.

In some embodiments, an AP MLD corresponding to the source link may indicate a link switching manner to be used by the Non-AP MLD. Certainly, it may also be that another device indicates a link switching manner to be used by the Non-AP MLD.

During roaming, the design of the first frame may be applied to the manner in which the target link (i.e., a new link) is added first and then a source link (i.e., an old link) is deleted, or may be applied to the manner in which the source link (i.e., an old link) is deleted first and then the target link (i.e., a new link) is added.

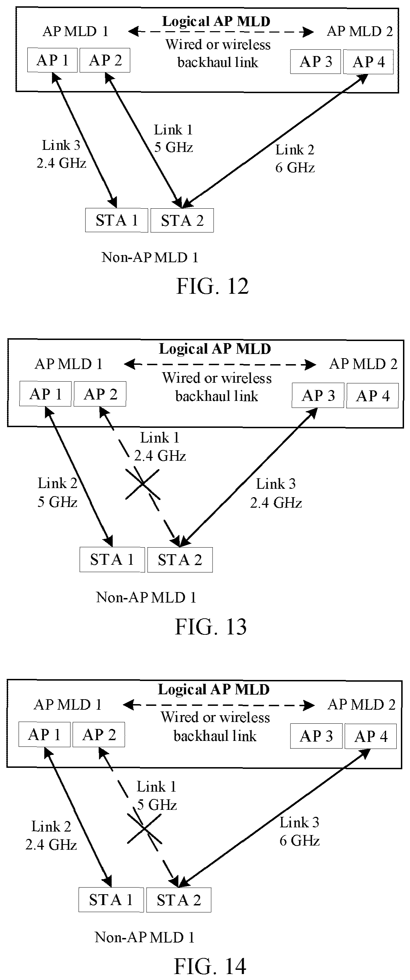

Specifically, for example, a process of adding the target link (i.e., the new link) first and then deleting the source link (i.e., the old link) is as follows (after roaming, an affiliated Non-AP STA (i.e., STA2) of Non-AP MLD 1 has a link with one affiliated AP on each of two AP MLDs (i.e., AP MLD 1 and AP MLD 2) within the logical AP MLD): Non-AP MLD 1 first performs a request-response exchange for adding Link 2 (i.e., the roaming link) with the source AP MLD (i.e., AP MLD 1) on Link 1 (i.e., the local link), and then, after completion, Non-AP MLD 1 performs a request-response exchange for deleting Link 1 (i.e., the local link) with the source AP MLD (i.e., AP MLD 1) on Link 1 (i.e., the local link); alternatively, Non-AP MLD 1 first performs a request-response exchange for adding Link 2 (i.e., the roaming link) with the source AP MLD (i.e., AP MLD 1) on Link 1 (i.e., the local link), and then, after completion, Non-AP MLD 1 performs a request-response exchange for deleting Link 1 (i.e., the roaming link) with the target AP MLD on Link 2. Here, Link 1 and Link 2 may be links in the same frequency band and the same channel (as illustrated in FIG. 11), or may be links in the same frequency band but different channels (as illustrated in FIG. 11), or may be links of different frequency bands (as illustrated in FIG. 12).

That is, as illustrated in FIGS. 11 and 12, in the process of adding the link, Link 1 is the local link (i.e., the first-type link), and Link 2 is the roaming link (i.e., the second-type link); in the process of deleting the link, Link 2 is the local link (i.e., the first-type link), and Link 1 is the roaming link (i.e., the second-type link). As illustrated in FIGS. 11 and 12, AP MLD 1 and AP MLD 2 are physical AP MLDs.

Specifically, for example, a process of deleting the source link (i.e., the old link) first and then adding the target link (i.e., the new link) is as follows (after roaming, two affiliated Non-AP STAs of Non-AP MLD 1 have links with one affiliated AP on each of two AP MLDs (i.e., AP MLD 1 and AP MLD 2)): Non-AP MLD 1 first performs a request-response exchange for deleting Link 1 (i.e., the local link) with the source AP MLD on Link 1 (i.e., the local link), and then, after completion, Non-AP MLD 1 performs a request-response exchange for adding Link 3 (i.e., the roaming link) with the source AP MLD on Link 2 (i.e., the local link). Here, Link 1 and Link 2 are links in different frequency bands; Link 1 and Link 3 may be links in the same frequency band and the same channel (as illustrated in FIG. 13), or may be links in the same frequency band but different channels (as illustrated in FIG. 13), or may be links in different frequency bands (as illustrated in FIG. 14).

That is, as illustrated in FIGS. 13 and 14, Link 1 and Link 2 are local links (i.e., the first-type links), and Link 3 is the roaming link (i.e., the second-type link). As illustrated in FIGS. 13 and 14, AP MLD 1 and AP MLD 2 are physical AP MLDs.

In the embodiments of the present disclosure, in a case where the Non-AP MLD adds or deletes a link, at least one link is kept in an enabled state, e.g., Link 3 illustrated in FIGS. 11 and 12, or Link 2 illustrated in FIGS. 13 and 14. That is, the Non-AP MLD may maintain link connection during roaming without interrupting data transmission, which may achieve uninterrupted roaming or seamless roaming of the Non-AP MLD between different AP MLDs within the logical AP MLD, and thereby improve roaming performance of the Non-AP MLD between different AP MLDs within the logical AP MLD.

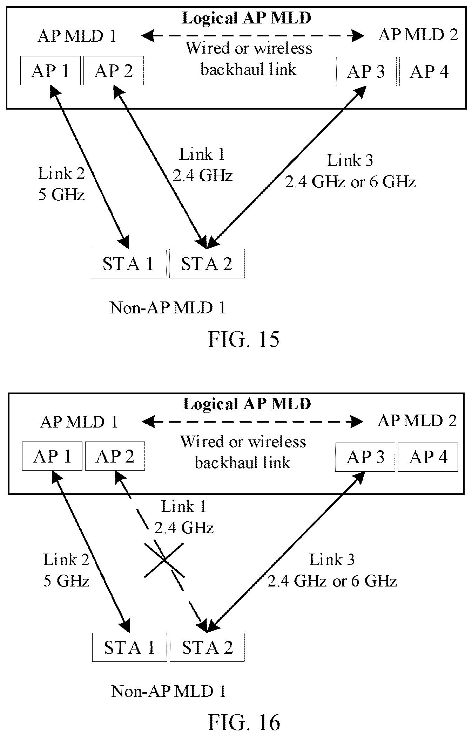

In some embodiments, as illustrated in FIG. 15, AP MLD 1 (i.e., a physical AP MLD) and AP MLD 2 (i.e., a physical AP MLD) belong to the same logical AP MLD, and Non-AP MLD 1 currently establishes Link 1 and Link 2 with AP MLD 1. In the process of Non-AP MLD 1 roaming to AP MLD 2, Non-AP MLD 1 may transmit a first frame to AP MLD 1 (i.e., the source AP MLD) to add Link 3 (Link 3 does not belong to AP MLD 1 that receives the first frame, and thus Link 3 is the second-type link (i.e., the roaming link)) with AP MLD 2 (i.e., the target AP MLD). After a period of time (i.e., after Link 3 is successfully added), Non-AP MLD 1 transmits a first frame to AP MLD 2 (i.e., the target AP MLD) to delete Link 1 (Link 1 does not belong to AP MLD 2 that receives the first frame, and thus Link 1 is the second-type link (i.e., the roaming link)) between Non-AP MLD 1 and AP MLD 1 (i.e., the source AP MLD); alternatively, after a period of time (i.e., after Link 3 is successfully added), Non-AP MLD 1 transmits a first frame to AP MLD 1 (i.e., the source AP MLD) to delete Link 1 (Link 1 belongs to AP MLD 1 that receives the first frame, and thus Link 1 is the first-type link (i.e., the local link)) between Non-AP MLD 1 and AP MLD 1 (i.e., the source AP MLD).

In some embodiments, as illustrated in FIG. 16, AP MLD 1 (i.e., a physical AP MLD) and AP MLD 2 (i.e., a physical AP MLD) belong to the same logical AP MLD, and Non-AP MLD 1 currently establishes Link 1 and Link 2 with AP MLD 1. In the process of Non-AP MLD 1 roaming to AP MLD 2, Non-AP MLD 1 may transmit a first frame to AP MLD 1 (i.e., the source AP MLD) to delete Link 1 (Link 1 belongs to AP MLD 1 that receives the first frame, and thus Link 1 is the first-type link (i.e., the local link)) with AP MLD 1 (i.e., the source AP MLD); after a period of time (i.e., after Link 1 is deleted), Non-AP MLD 1 transmits a first frame to AP MLD 1 (i.e., the source AP MLD) to add Link 3 (Link 3 does not belong to AP MLD 1 that receives the first frame, and thus Link 3 is the second-type link (i.e., the roaming link)) with AP MLD 2 (i.e., the target AP MLD).

In some embodiments, the first field is a roaming identifier present field of the target AP MLD. The roaming identifier present field of the target AP MLD is used for indicating whether a roaming identifier field of the target AP MLD exists in a first element of the first frame, and the roaming identifier field of the target AP MLD is used for indicating a roaming identifier of the target AP MLD.

In a case where the roaming identifier present field of the target AP MLD is used for indicating that the roaming identifier field of the target AP MLD does not exist in the first element of the first frame, the first frame is used for adding or deleting the first-type link; and/or in a case where the roaming identifier present field of the target AP MLD is used for indicating that the roaming identifier field of the target AP MLD exists in the first element of the first frame, the first frame is used for adding or deleting the second-type link.

In some embodiments, the first element is a reconfiguration multi-link element. In this case, specifically, for example, the first frame is a multi-link operation update request frame.

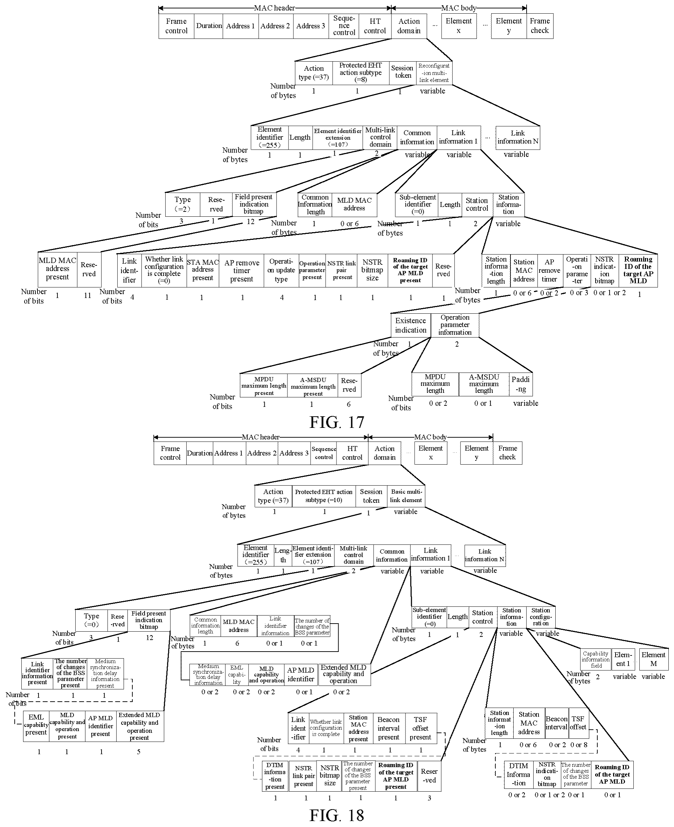

Specifically, for example, the multi-link operation update request frame transmitted by the Non-AP MLD may be as illustrated in FIG. 17, the reconfiguration multi-link element includes N link information fields. Each link information field in the N link information fields includes a station control field and a station information field, the station control field includes an operation update type field and a roaming identifier present field of the target AP MLD; the operation update type field is used for indicating addition of a link, or the operation update type field is used for indicating deletion of a link; and the roaming identifier present field of the target AP MLD is used for indicating whether the roaming identifier field of the target AP MLD exists in the station information field.

As illustrated in FIG. 17, the operation update type field occupies 4 bits. For example, a value of 0000 in the operation update type field indicates the addition of the link, and a value of 0001 in the operation update type field indicates the deletion of the link; alternatively, the value of 0001 in the operation update type field indicates the addition of the link, and the value of 0000 in the operation update type field indicates the deletion of the link; alternatively, other values in the operation update type field indicate the addition of the link and the deletion of the link, respectively. Alternatively, the operation update type field occupies 1 bit. For example, a value of 0 in the operation update type field indicates the addition of the link, and a value of 1 in the operation update type field indicates the deletion of the link; alternatively, the value of 1 in the operation update type field indicates the addition of the link, and the value of 0 in the operation update type field indicates the deletion of the link.

As illustrated in FIG. 17, the roaming identifier present field of the target AP MLD occupies 1 bit. For example, a value of 0 in the roaming identifier present field of the target AP MLD indicates that the roaming identifier field of the target AP MLD exists in the station information field, and a value of 1 in the roaming identifier present field of the target AP MLD indicates that the roaming identifier field of the target AP MLD does not exist in the station information field; alternatively, the value of 1 in the roaming identifier present field of the target AP MLD indicates that the roaming identifier field of the target AP MLD exists in the station information field, and the value of 0 in the roaming identifier present field of the target AP MLD indicates that the roaming identifier field of the target AP MLD does not exist in the station information field.

As illustrated in FIG. 17, the station control field further includes some other fields, such as a non simultaneous transmit and receive (NSTR) link pair present field and an NSTR bitmap size field.

As illustrated in FIG. 17, the station information field further includes some other fields, such as an operation parameter field and an NSTR indication bitmap field. An existence indication field in the operation parameter field includes a medium access control protocol data unit (MPDU) maximum length present field and an aggregate media access control service data unit (A-MSDU) maximum length present field, and an operation parameter information field in the operation parameter field includes an MPDU maximum length field and an A-MSDU maximum length field.

In some embodiments, the first element is a basic multi-link element. In this case, specifically, for example, the first frame is a frame used for adding or deleting the roaming link. That is, the first frame is a frame that is dedicated to adding or deleting the roaming link. Certainly, the first frame may also be any other frame, which is not limited in the embodiments of the present disclosure.

Specifically, for example, a new frame used for adding or deleting the roaming link is added (e.g., a value of the protected EHT action subtype field is 10), which is as illustrated in FIG. 18; and a basic multi-link element is used in the frame used for adding or deleting the roaming link instead of the reconfiguration multi-link element (the roaming function is similar to an association function, and the basic multi-link element is used in an association frame). As illustrated in FIG. 18, the basic multi-link element includes N link information fields; each of the N link information fields includes a station control field and a station information field, the station control field includes the roaming identifier present field of the target AP MLD, and the roaming identifier present field of the target AP MLD is used for indicating whether the roaming identifier field of the target AP MLD exists in the station information field.

As illustrated in FIG. 18, the roaming identifier present field of the target AP MLD occupies 1 bit. For example, a value of 0 in the roaming identifier present field of the target AP MLD indicates that the roaming identifier field of the target AP MLD exists in the station information field, and a value of 1 in the roaming identifier present field of the target AP MLD indicates that the roaming identifier field of the target AP MLD does not exist in the station information field; alternatively, the value of 1 in the roaming identifier present field of the target AP MLD indicates that the roaming identifier field of the target AP MLD exists in the station information field, and the value of 0 in the roaming identifier present field of the target AP MLD indicates that the roaming identifier field of the target AP MLD does not exist in the station information field.

As illustrated in FIG. 18, a common information field in the basic multi-link element may include at least one of: a common information length field, an MLD MAC address field, a link identifier information field, a field for the number of changes of the BSS parameter, a medium synchronization delay information field, an enhanced multi-link (EML) capability field, an MLD capability and operation field, an AP MLD identifier field, or an extended MLD capability and operation field.

As illustrated in FIG. 18, the station control field in the basic multi-link element may further include some other fields, such as a time synchronization function (TSF) offset present field, a delivery traffic indication message (DTIM) information present field, and an NSTR bitmap size field.

As illustrated in FIG. 18, the station information field in the basic multi-link element may further include some other fields, such as a TSF offset field, a DTIM information field, and an NSTR indication bitmap field.

In some embodiments, the first field is set to a first value, the first value is used for indicating that the first field is a reserved field, and the first frame is used for adding or deleting the local link; and/or the first field is set to a second value, the second value is used for indicating the roaming identifier of the target AP MLD, and the first frame is used for adding or deleting the roaming link. For example, the first value is zero, and the second value is non-zero. Certainly, the first value and the second value may also be other values, which is not limited in the embodiments of the present disclosure.

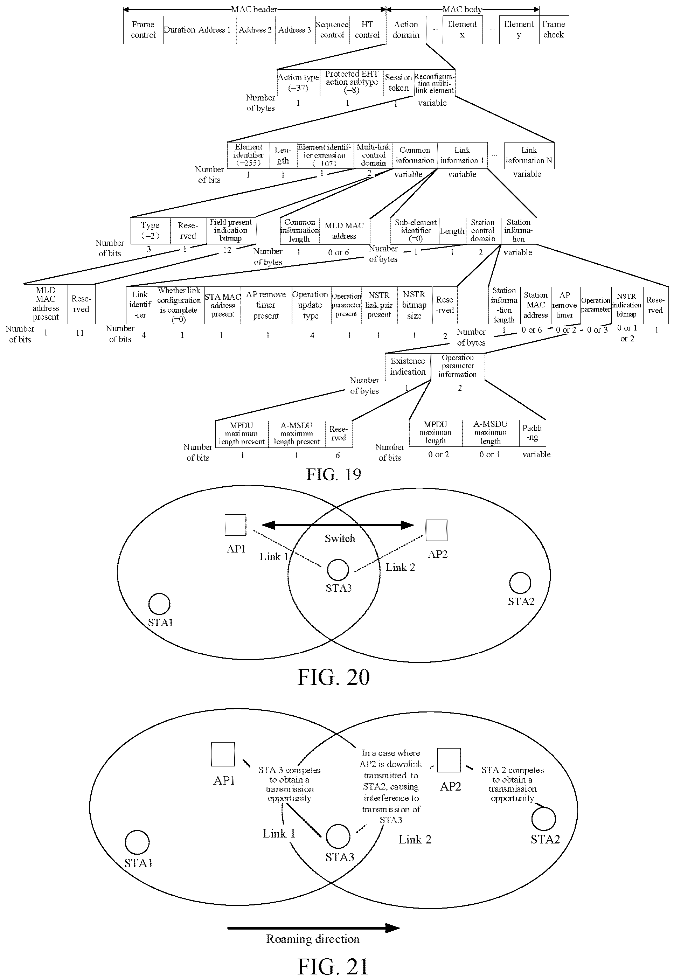

In some embodiments, the first frame is a multi-link operation update request frame. That is, the existing multi-link operation update request frame is used for adding/deleting the link. A reserved field in the station information field in the reconfiguration multi-link element is used for indicating the roaming identifier of the target AP MLD (i.e., a target AP MLD roaming ID), which is as illustrated in FIG. 19. In this manner, a value of 0 cannot be a valid value for the roaming identifier of the target AP MLD (i.e., the target AP MLD roaming ID). The value of 0 is used for indicating that the field is the reserved field, i.e., used for indicating that the frame is used for adding or deleting the local link. The non-zero value indicates the roaming identifier of the target AP MLD, and also indicates that the frame is used for adding or deleting the roaming link.

In some embodiments, the first field is an operation update type field. The operation update type field is used for indicating that the first frame is used used for adding the first-type link, or the operation update type field is used for indicating that the first frame is used for deleting the first-type link, or the operation update type field is used for indicating that the first frame is used for adding the second-type link, or the operation update type field is used for indicating that the first frame is used for deleting the second-type link.

In some embodiments, the first frame is a multi-link operation update request frame.

For example, as illustrated in FIG. 17 or 19, the operation update type field occupies 4 bits. A value of 0000 in the operation update type field indicates operation parameter update, a value of 0001 in the operation update type field indicates the deletion of the local link, a value of 0010 in the operation update type field indicates the addition of the local link, a value of 0011 in the operation update type field indicates the deletion of the roaming link, and a value of 0100 in the operation update type field indicates the addition of the roaming link. Alternatively, the value of 0000 in the operation update type field indicates the operation parameter update, the value of 0001 in the operation update type field indicates the deletion of the roaming link, the value of 0010 in the operation update type field indicates the addition of the roaming link, the value of 0011 in the operation update type field indicates the deletion of the local link, and the value of 0100 in the operation update type field indicates the addition of the local link. Certainly, other values may also be used for indicating the addition of the local link or the deletion of the local link, and the addition of the roaming link or the deletion of the roaming link.

As another example, the multi-link operation update request frame is used for adding/deleting the link, and an operation update type value is added to indicate the addition of the roaming link or the deletion of the roaming link. For example, the value of 0 indicates the operation parameter update, the value of 1 indicates the deletion of the local link, the value of 2 indicates the addition of the local link, the value of 3 indicates the deletion of the roaming link, and the value of 4 indicates the addition of the roaming link.

In some embodiments, during roaming of the Non-AP MLD between different AP MLDs within the logical AP MLD, a target link corresponding to a first Non-AP STA in the Non-AP MLD is in the same frequency band as a source link corresponding to the first Non-AP STA in the Non-AP MLD.

Specifically, for example, as illustrated in FIG. 11, during roaming of Non-AP MLD 1 between AP MLD 1 and AP MLD 2 that are within the logical AP MLD, a target link (i.e., Link 2) corresponding to STA 2 is in the same frequency band (i.e., 2.4 GHz) as a source link (i.e., Link 1) corresponding to STA 2.

In some embodiments, during roaming of the Non-AP MLD between different AP MLDs within the logical AP MLD, a target link corresponding to a first Non-AP STA in the Non-AP MLD is in a different frequency band from a source link corresponding to the first Non-AP STA in the Non-AP MLD.

Specifically, for example, as illustrated in FIG. 12, during roaming of Non-AP MLD 1 between AP MLD 1 and AP MLD 2 that are within the logical AP MLD, a target link (i.e., Link 2) corresponding to STA 2 is in a different frequency band from a source link (i.e., Link 1) corresponding to STA 2. Here, the target link (i.e., Link 2) corresponding to STA 2 is in the frequency band of 6 GHz, and the source link (i.e., Link 1) corresponding to STA 2 is in the frequency band of 5 GHz.

Specifically, for example, during roaming of Non-AP MLD, the source AP and the target AP (i.e., the new and old APs) affiliate to different AP MLDs, and affiliate to the same logical AP MLD. In a case of adopting the manner in which the new link (i.e., the target link) is added first and then the old link (i.e., the source link) is deleted, the new link (i.e., the target link) and the old link (i.e., the source link) coexist for a period of time. The new link (i.e., the target link) and the old link (i.e., the source link) may be links in the same frequency band and the same channel, or may be links in the same frequency band but different channels.

In some embodiments, during roaming of the Non-AP MLD between different AP MLDs within the logical AP MLD, in response to that a source link and a target link that correspond to a first Non-AP STA in the Non-AP MLD are links in the same frequency band but different channels, and the source link and the target link that correspond to the first Non-AP STA are both in an enabled state, the first Non-AP STA performs following operations that:
in response to that the first Non-AP STA has stayed on the target link for more than first duration without obtaining a transmission opportunity, and a target AP corresponding to the target link has not initiated transmission with the first Non-AP STA, the first Non-AP STA switches from the target link to the source link;
   and/or
in response to that the first Non-AP STA has stayed on the source link for more than a second duration without obtaining a transmission opportunity, and a source AP corresponding to the source link has not initiated transmission with the first Non-AP STA, the first Non-AP STA switches from the source link to the target link.

Specifically, the source link and the target link that correspond to the first Non-AP STA are both in the enabled state, which means that the first Non-AP STA is connected to the source link and the target link simultaneously.

In some embodiments, the first duration is a sum of duration of a first timer and a distributed interframe spacing (DIFS). The first timer is started when the first Non-AP STA switches to the target link, and is stopped when the first Non-AP STA receives a beacon frame within the first duration.

For example, the duration of the first timer is less than or equal to 72 microseconds.

In some embodiments, the duration of the first timer and start-stop conditions of the first timer are agreed upon by a protocol, or the duration of the first timer and the start-stop conditions of the first timer are configured by the source AP MLD, or the duration of the first timer and the start-stop conditions of the first timer are configured by the target AP MLD.

In some embodiments, the second duration is a sum of duration of a second timer and a DIFS.

The second timer is started when the first Non-AP STA switches to the source link, and is stopped when the first Non-AP STA receives a beacon frame within the second duration.

For example, the duration of the second timer is less than or equal to 72 microseconds.

In some embodiments, the duration of the second timer and start-stop conditions of the second timer are agreed upon by a protocol, or the duration of the second timer and the start-stop conditions of the second timer are configured by the source AP MLD, or the duration of the second timer and the start-stop conditions of the second timer are configured by the target AP MLD.

In some embodiments, the DIFS is agreed upon by a protocol, or the DIFS is configured by the source AP MLD, or the DIFS is configured by the target AP MLD.

Specifically, for example, in response to that the new link and the old link are links in the same frequency band but different operating channels (i.e., primary channels), the station may lose medium synchronization when switching channels because the station does not receive the latest beacon frame. To handle this problem, as illustrated in FIG. 20, STA3 is specified to perform operations, which are as follows. In a case where STA3 switches from Link 1 to Link 2, STA3 starts the first timer, and performs clear channel assessment (CCA) within the first duration. In response to that STA3 receives a beacon frame within the first duration, the first timer is stopped and channel contention is performed normally; in response to that STA3 does not receive the beacon frame within the first duration, channel contention is performed normally after the first timer times out. Furthermore, in response to that STA3 has stayed on Link 2 for more than the first duration (e.g., the duration of the first timer + DIFS) without obtaining a transmission opportunity, and AP2 corresponding to Link 2 has not initiated transmission with STA3, STA3 switches from Link 2 to Link 1. To handle this problem, as illustrated in FIG. 20, STA3 is specified to perform operations, which are as follows. In a case where STA3 switches from Link 2 to Link 1, STA3 starts the second timer, and performs clear channel assessment (CCA) within the second duration. In response to that STA3 receives a beacon frame within the second duration, the second timer is stopped and channel contention is performed normally; in response to that STA3 does not receive the beacon frame within the second duration, channel contention is performed normally after the second timer times out. Furthermore, in response to that STA3 has stayed on Link 1 for more than the second duration (e.g., the duration of the second timer + DIFS) without obtaining a transmission opportunity, and AP1 corresponding to Link 1 has not initiated transmission with STA3, STA3 switches from Link 1 to Link 2.

In some embodiments, during roaming of the Non-AP MLD between different AP MLDs within the logical AP MLD, in a scenario that a source link and a target link that correspond to a first Non-AP STA in the Non-AP MLD are links in the same frequency band and the same channel, and the source link and the target link that correspond to the first Non-AP STA are both in an enabled state, the first Non-AP STA adjusts transmission power in an overlapping area; and after the transmission power is adjusted, an AP (i.e., the source AP) corresponding to the source link and an AP (i.e., the target AP) corresponding to the target link are capable of receiving an uplink signal of the first Non-AP STA. The overlapping area is an area being covered by the AP (i.e., the source AP) corresponding to the source link and the AP (i.e., the target AP) corresponding to the target link.

Specifically, for example, in a scenario that a new link (i.e., the target link) and an old link (i.e., the source link) are links in the same frequency band and the same channel, transmission power of STA3 in the overlapping area needs to be adjusted, and thus both AP1 (i.e., the source AP) and AP2 (i.e., the target AP) are capable of receiving a signal of STA3 (this is because STA3 can receive downlink signals from the two APs in the overlapping area, but both APs may not be able to receive the signal of STA3). Therefore, it is ensured that in a case where STA3 obtains a transmission opportunity, the BSSs where the two APs are located may correctly set the network allocation vector (NAV), which avoids the conflict illustrated in FIG. 21.

In some embodiments, during roaming of the Non-AP MLD between different AP MLDs within the logical AP MLD, in a scenario that a source link and a target link that correspond to a first Non-AP STA in the Non-AP MLD are links in the same frequency band and the same channel, and the source link and the target link that correspond to the first Non-AP STA are both in an enabled state, an AP (i.e., the source AP) corresponding to the source link and an AP (i.e., the target AP) corresponding to the target link coordinate downlink transmission for the first Non-AP STA.

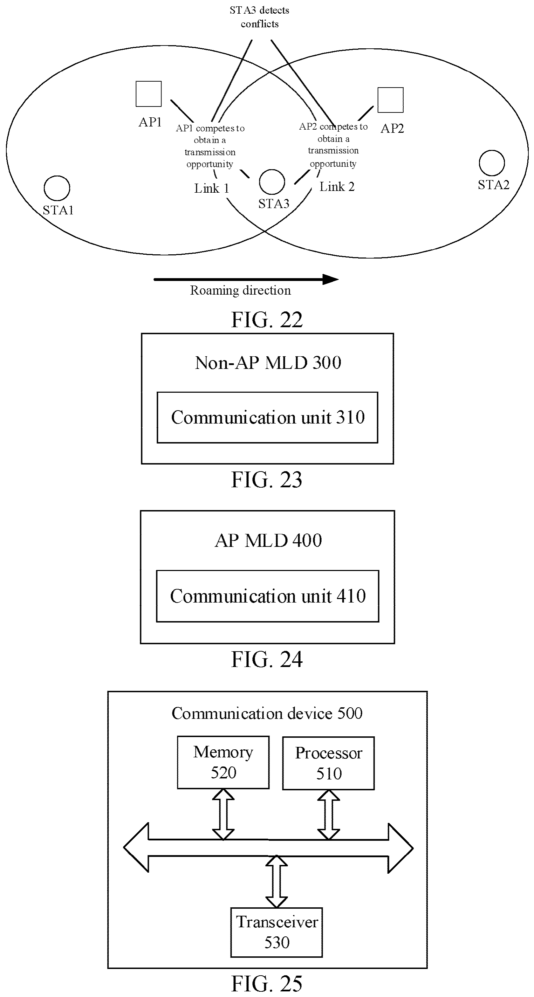

Specifically, for example, in a scenario that a new link (i.e., the target link) and an old link (i.e., the source link) are links in the same frequency band and the same channel, in a case of performing transmission to a roaming station (i.e., STA3), the new and old APs (i.e., API and AP2) need to coordinate downlink transmission to avoid the conflict illustrated in FIG. 22. Specifically, in order to coordinate downlink transmission, the joint transmission (JT) mechanism and/or a coordinated orthogonal frequency division multiple access (C-OFDMA) mechanism and/or a transmission opportunity (TXOP) sharing (TXS) mechanism in a multi-AP coordination manner may be used.

In some embodiments, the target AP MLD within the logical AP MLD synchronizes capability information of the Non-AP MLD and/or operation parameter information of the Non-AP MLD with the source AP MLD within the logical AP MLD. That is, during roaming of the Non-AP MLD, the target AP MLD within the logical AP MLD and the source AP MLD within the logical AP MLD may synchronize related information of the Non-AP MLD.

Specifically, similar to establishing an association between the Non-AP MLD and the AP MLD, during roaming of the Non-AP MLD, a new AP MLD (i.e., the target AP MLD) needs to understand the capability information and operation parameter information of the Non-AP MLD, which specifically include capability information of a multi-link device level (MLD level) and operation parameter information of the MLD level, as well as capability information of a link level and operation parameter information of the link level. These pieces of information may be synchronized from the old AP MLD (i.e., the source AP MLD) to the new AP MLD (i.e., the target AP MLD) via backhaul, and may be synchronized at different times.

In some embodiments, the capability information and/or operation parameter information of the Non-AP MLD include at least one of:
the capability information of the MLD level and/or the operation parameter information of the MLD level, or the capability information of the link level and/or the operation parameter information of the link level.

In some embodiments, the capability information and/or operation parameter information of the MLD level includes at least one of: a first information set, a second information set, a block acknowledgment (BA) parameter, or mapping information of a traffic identifier to a link.

The first information set includes at least one of: pairwise transient key security association (PTKSA), an MLD MAC address, enhanced multi-link (EML) capability information, MLD capability and MLD operation, or extended MLD capability and extended MLD operation.

The second information set includes at least one of: a stream classification service (SCS), or a mirrored stream classification service (MSCS).

In some embodiments, the first information set is synchronized from the source AP MLD controlled by the logical AP MLD to all AP MLDs within the logical AP MLD when the Non-AP MLD establishes an association with the logical AP MLD; alternatively, the first information set is synchronized from the source AP MLD to the target AP MLD when the Non-AP MLD adds the roaming link.

Specifically, for example, as for part of the capability information of the multi-link device level of the Non-AP MLD and part of the operation parameter information of the multi-link device level of the Non-AP MLD, i.e., as for the first information set, the first information set includes at least one of: the PTKSA, the MLD MAC address, the EML capability (including enhanced multi-link multi-radio (EMLMR) and/or enhanced multi-link single radio (EMLSR)), the MLD capability and MLD operation, or the extended MLD capability and extended MLD operation. Specifically, for example, the first information set may be pre-synchronized. That is, when the Non-AP MLD establishes an association with the logical AP MLD corresponding to a roaming domain via a certain AP MLD (i.e., a physical AP MLD), the logical AP MLD controls the AP MLD to synchronize the first information set to all AP MLDs within the logical AP MLD (in this manner, a backhaul link load is relatively high and there is a certain redundancy, but time consumption of the backhaul link during roaming may be reduced). Specifically, as another example, when the Non-AP MLD adds a new link (i.e., the roaming link), the first information set may be synchronized from the old AP MLD (i.e., the source AP MLD) to the new AP MLD (i.e., the target AP MLD) (in this manner, the backhaul link has less redundancy, but the backhaul link consumes slightly more time during roaming).

In some embodiments, the second information set is synchronized from the source AP MLD controlled by the logical AP MLD to all AP MLDs within the logical AP MLD after the Non-AP MLD establishes an association with the logical AP MLD; alternatively, the second information set is synchronized from the source AP MLD to the target AP MLD when the Non-AP MLD adds the roaming link.

Specifically, for example, as for part of the operation parameter information of the multi-link device level of the Non-AP MLD, i.e., as for the second information set, the second information set includes at least one of: the stream classification service (SCS), or the mirrored stream classification service (MSCS). The Non-AP MLD and the logical AP MLD may interact with each other only after they establish the association. Therefore, similarly, when SCS negotiation and/or MSCS negotiation is performed, the logical AP MLD may control the AP MLD to synchronize the operation parameter to all AP MLDs within the logical AP MLD; alternatively, when the Non-AP MLD adds a new link (i.e., the roaming link), the operation parameter may be synchronized from the old AP MLD (i.e., the source AP MLD) to the new AP MLD (i.e., the target AP MLD).

In some embodiments, the BA parameter is synchronized from the source AP MLD to the target AP MLD when the Non-AP MLD adds the roaming link.

Specifically, for example, specific parameter values (e.g., receive reordering buffer control per TA/TID Winstart corresponding to each transmission address and each traffic identifier, and/or scoreboard context control Winstart) involved in part of the operation parameter information of the multi-link device level of the Non-AP MLD (e.g., the block ack (BA) parameter) will be updated as the interaction proceed. That is, a value of the parameter when roaming occurs is different from a value during the BA negotiation (i.e., interaction of an adding BA request (ADDBA request) frame and an adding BA response (ADDBA response) frame). The type of the operation parameter information may be updated frequently and is not suitable for synchronization during the related negotiation (e.g., the BA negotiation). Moreover, since the operation parameter information is information of the multi-link device level, the operation parameter information should not be required to be renegotiated during roaming of the Non-AP MLD, and should be synchronized from the old AP MLD (i.e., the source AP MLD) to the new AP MLD (i.e., the target AP MLD) when the Non-AP MLD adds the new link (i.e., the roaming link).

In some embodiments, when the Non-AP MLD adds the roaming link, the mapping information of the traffic identifier to the link is broadcast by the target AP MLD, or the mapping information of the traffic identifier to the link is associated with all default traffic identifiers (TIDs), or the mapping information of the traffic identifier to the link is determined by negotiation between the Non-AP MLD and the target AP MLD.

Specifically, for example, part of the operation parameter information of the multi-link device level of the Non-AP MLD (e.g., the mapping of the traffic identifier to the link (TID-to-link mapping)) is related to current existence or non-existence, or enabled or disabled state of the link, and is not suitable for advance synchronization. Therefore, when the Non-AP MLD adds the new link (i.e., the roaming link), mandatory mapping for the broadcast by the target AP MLD (if that exists) should be adopted; or uplink and downlink of all default traffic identifiers (TID) are mapped to the new link; or the old AP MLD (i.e., the source AP MLD) sets the traffic identifier to link mapping element field in a response frame of adding the roaming link transmitted to the Non-AP MLD according to information obtained from the new AP MLD (i.e., the target AP MLD), so as to suggest a specific mapping of the traffic identifier to the link, and then the Non-AP MLD explicitly negotiates the mapping information of traffic identifier to the link with the new AP MLD (i.e., the target AP MLD) according to the suggestion.

In some embodiments, the capability information and/or operation parameter information of the link level includes at least one of: a third information set, a fourth information set, or a fifth information set.

The third information set includes at least one of: a station MAC address, non-simultaneous transmit and receive (NSTR) link pair information, a roaming identifier of a target AP MLD, a link identifier, a link capability information field, a link high throughput (HT) capability, a link very high throughput (VHT) capability, a link high efficiency (HE) capability, a link extreme high throughput (EHT) capability, a link HT operation parameter, a link VHT operation parameter, a link HE operation parameter, or a link EHT operation parameter.

The fourth information set includes at least one of: a group temporary key (GTK), an integrity group temporary key (IGTK), or a beacon integrity group temporary key (BIGTK).

The fifth information set includes at least one of: target wake time (TWT), or restricted target wake time (R-TWT).

In some embodiments, the third information set is synchronized from the source AP MLD to the target AP MLD in a case where the Non-AP MLD adds the roaming link.

Specifically, for example, as for part of the capability information of the link level of the Non-AP MLD and part of the operation parameter information of the link level of the Non-AP MLD, i.e., as for the third information set, the third information set includes at least one of: the station MAC address, the NSTR link pair information (including whether the NSTR link pair exists, size of an NSTR bitmap, and an NSTR indication bitmap), the roaming identifier of the target AP MLD, the link identifier, the link capability information field, the link HT capability, the link VHT capability, the link HE capability, the link EHT capability, the link HT operation parameter, the link VHT operation parameter, the link HE operation parameter, or the link EHT operation parameter. The third information set should be synchronized from the old AP MLD (i.e., the source AP MLD) to the new AP MLD (i.e., the target AP MLD) in a case where the Non-AP MLD adds the new link (i.e., the roaming link).

In some embodiments, the fourth information set is obtained by the source AP MLD from the target AP MLD and transmitted to the Non-AP MLD, or the fourth information set is transmitted by the target AP MLD to the Non-AP MLD via a group key handshake protocol after the Non-AP MLD adds the roaming link.

Specifically, for example, as part of the operation parameter information of the link level of the Non-AP MLD, i.e., as for the fourth information set, the fourth information set includes at least one of: the group temporary key (GTK), the integrity group temporary key (IGTK), or the beacon integrity group temporary key (BIGTK). The fourth information set should be obtained by the old AP MLD (i.e., the source AP MLD) from the new AP MLD (i.e., the target AP MLD) and then carried in the response frame of adding the roaming link that is transmitted to the Non-AP MLD; alternatively, after the addition of the roaming link is completed, the fourth information set is transmitted by the new AP MLD (i.e., the target AP MLD) to the Non-AP MLD via the group key handshake protocol.

As for part of the operation parameter information of the link level of the Non-AP MLD, i.e., as for the fifth information set, the fifth information set includes at least one of: the TWT, or the R-TWT. The fifth information set should be transmitted to the Non-AP MLD by the following manner: the old AP MLD (i.e., the source AP MLD) transmits a negotiation request to the new AP MLD (i.e., the target AP MLD) instead of the Non-AP MLD based on the TWT and/or the R-TWT that have been negotiated between the old AP MLD (i.e., the source AP MLD) and the Non-AP MLD on the current link, and the old AP MLD (i.e., the source AP MLD) carries the TWT and/or R-TWT negotiation response information received from the new AP MLD (i.e., the target AP MLD) in the response frame of adding the roaming link that is transmitted to the Non-AP MLD; or the Non-AP MLD carries the TWT and/or R-TWT negotiation request information in a request frame of adding the roaming link, and the old AP MLD (i.e., the source AP MLD) forwards the TWT and/or R-TWT negotiation request information to the new AP MLD (i.e., the target AP MLD), and carries the TWT and/or R-TWT negotiation response information received from the new AP MLD (i.e., the target AP MLD) in the response frame of adding the roaming link that is transmitted to the Non-AP MLD.

Therefore, in the embodiments of the present disclosure, in a case where the Non-AP MLD roams between different AP MLDs within the logical AP MLD, the Non-AP MLD may add or delete the first-type linkbased on the first field in the first frame transmitted by the AP MLD, or the Non-AP MLD may add or delete the second-type link based on the first field in the first frame transmitted by the AP MLD, which may achieve uninterrupted roaming or seamless roaming of the Non-AP MLD between different AP MLDs within the logical AP MLD, and thereby improve roaming performance of the Non-AP MLD between different AP MLDs within the logical AP MLD.

In conjunction with FIGS. 10 to 22, the method embodiments of the present disclosure are described in detail above, and the apparatus embodiments of the present disclosure will be described in detail below in conjunction with FIGS. 23 to 27. It should be understood that the apparatus embodiments and the method embodiments correspond to each other, and similar descriptions may refer to the method embodiments.

FIG. 23 illustrates a schematic block diagram of a Non-AP MLD 300 according to embodiments of the present disclosure. The Non-AP MLD 300 roams between different AP MLDs within a logical AP MLD. As illustrated in FIG. 23, the Non-AP MLD 300 includes:
a communication unit 310, configured to transmit a first frame;
where the first frame includes a first field, and the first field is used for indicating that the first frame is used for adding or deleting a first-type link, or the first field is used for indicating that the first frame is used for adding or deleting a second-type link.

In some embodiments, the first field is a roaming identifier present field of a target AP MLD, where the roaming identifier present field of the target AP MLD is used for indicating whether a roaming identifier field of the target AP MLD exists in a first element of the first frame, and the roaming identifier field of the target AP MLD is used for indicating a roaming identifier of the target AP MLD;
where in a case where the roaming identifier present field of the target AP MLD is used for indicating that the roaming identifier field of the target AP MLD does not exist in the first element of the first frame, the first frame is used for adding or deleting the first-type link; and/or in a case where the roaming identifier present field of the target AP MLD is used for indicating that the roaming identifier field of the target AP MLD exists in the first element of the first frame, the first frame is used for adding or deleting the second-type link.

In some embodiments, the first element is a reconfiguration multi-link element, or the first element is a basic multi-link element.

In some embodiments, in a case where the first element is the reconfiguration multi-link element, the first frame is a multi-link operation update request frame.

In some embodiments, in a case where the first element is the basic multi-link element, the first frame is a frame used for adding or deleting a roaming link.

In some embodiments, the first field is set to a first value, the first value is used for indicating that the first field is a reserved field, and the first frame is used for adding or deleting a local link; and/or the first field is set to a second value, the second value is used for indicating a roaming identifier of a target AP MLD, and the first frame is used for adding or deleting a roaming link.

In some embodiments, the first value is zero, and the second value is non-zero.

In some embodiments, the first field is an operation update type field;
where the operation update type field is used for indicating that the first frame is used for adding the first-type link, or the operation update type field is used for indicating that the first frame is used for deleting the first-type link, or the operation update type field is used for indicating that the first frame is used for adding the second-type link, or the operation update type field is used for indicating that the first frame is used for deleting the second-type link.

In some embodiments, the first frame is a multi-link operation update request frame.

In some embodiments, during roaming of the Non-AP MLD between different AP MLDs within the logical AP MLD, the Non-AP MLD performs link switching in a first manner or a second manner; where first manner is a manner in which a target link is added first and then a source link is deleted, and the second manner is a manner in which a source link is deleted first and then a target link is added.

In some embodiments, during roaming of the Non-AP MLD between different AP MLDs within the logical AP MLD, a target link corresponding to a first non-access point station (Non-AP STA) in the Non-AP MLD is in the same frequency band as a source link corresponding to the first Non-AP STA in the Non-AP MLD.

In some embodiments, during roaming of the Non-AP MLD between different AP MLDs within the logical AP MLD, a target link corresponding to a first Non-AP STA in the Non-AP MLD is in a different frequency band from a source link corresponding to the first Non-AP STA in the Non-AP MLD.

In some embodiments, during roaming of the Non-AP MLD between different AP MLDs within the logical AP MLD, in response to that a source link and a target link that correspond to a first Non-AP STA in the Non-AP MLD are links in the same frequency band but different channels, and the source link and the target link that correspond to the first Non-AP STA are both in an enabled state, the first Non-AP STA performs following operations that:
in response to that the first Non-AP STA has stayed on the target link for more than first duration without obtaining a transmission opportunity, and a target access point (AP) corresponding to the target link has not initiated transmission with the first Non-AP STA, the first Non-AP STA switches from the target link to the source link; and/or
in response to that the first Non-AP STA has stayed on the source link for more than a second duration without obtaining a transmission opportunity, and a source AP corresponding to the source link has not initiated transmission with the first Non-AP STA, the first Non-AP STA switches from the source link to the target link.

In some embodiments, the first duration is a sum of duration of a first timer and a distributed interframe spacing (DIFS);
where the first timer is started when the first Non-AP STA switches to the target link, and the first timer is stopped when the first Non-AP STA receives a beacon frame within the first duration.

In some embodiments, the second duration is a sum of duration of a second timer and a DIFS;
where the second timer is started when the first Non-AP STA switches to the source link, and the second timer is stopped when the first Non-AP STA receives a beacon frame within the second duration.

In some embodiments, during roaming of the Non-AP MLD between different AP MLDs within the logical AP MLD, in response to that a source link and a target link that correspond to a first Non-AP STA in the Non-AP MLD are links in the same frequency band and the same channel, and the source link and the target link that correspond to the first Non-AP STA are both in an enabled state, the first Non-AP STA adjusts transmission power of an overlapping area; and after the transmission power is adjusted, an AP corresponding to the source link and an AP corresponding to the target link are capable of receiving an uplink signal of the first Non-AP STA. The overlapping area is an area capable of being covered by the AP corresponding to the source link and the AP corresponding to the target link.

In some embodiments, during roaming of the Non-AP MLD between different AP MLDs within the logical AP MLD, in response to that a source link and a target link that correspond to a first Non-AP STA in the Non-AP MLD are links in the same frequency band and the same channel, and the source link and the target link that correspond to the first Non-AP STA are both in an enabled state, an AP corresponding to the source link and an AP corresponding to the target link coordinate downlink transmission for the first Non-AP STA.

In some embodiments, the communication unit mentioned above may be a communication interface or a transceiver, or may be an input/output interface of a communication chip or a system on chip. The processing unit mentioned above may include one or more processors.

It should be understood that the Non-AP MLD 300 according to the embodiments of the present disclosure may correspond to the Non-AP MLD in the method embodiments of the present disclosure, and the above and other operations and/or functions of each unit in the Non-AP MLD 300 are respectively for implementing the corresponding processes of the Non-AP MLD in the method 200 illustrated in FIG. 10, which will not be repeated here for the sake of brevity.

FIG. 24 illustrates a schematic block diagram of an AP MLD 400 according to embodiments of the present disclosure. The AP MLD 400 belongs to a logical AP MLD. As illustrated in FIG. 24, the AP MLD 400 includes:
a communication unit 410, configured to receive a first frame transmitted by a non-access point multi-link device (Non-AP MLD);
where the Non-AP MLD roams between different AP MLDs within the logical AP MLD; and
the first frame includes a first field, and the first field is used for indicating that the first frame is used for adding or deleting a first-type link, or the first field is used for indicating that the first frame is used for adding or deleting a second-type link.

In some embodiments, the first field is a roaming identifier present field of a target AP MLD, where the roaming identifier present field of the target AP MLD is used for indicating whether a roaming identifier field of the target AP MLD exists in a first element of the first frame, and the roaming identifier field of the target AP MLD is used for indicating a roaming identifier of the target AP MLD;
where in a case where the roaming identifier present field of the target AP MLD is used for indicating that the roaming identifier field of the target AP MLD does not exist in the first element of the first frame, the first frame is used for adding or deleting the first-type link; and/or, in a case where the roaming identifier present field of the target AP MLD is used for indicating that the roaming identifier field of the target AP MLD exists in the first element of the first frame, the first frame is used for adding or deleting the second-type link.

In some embodiments, the first element is a reconfiguration multi-link element, or the first element is a basic multi-link element.

In some embodiments, in a case where the first element is the reconfiguration multi-link element, the first frame is a multi-link operation update request frame.

In some embodiments, in a case where the first element is the basic multi-link element, the first frame is a frame used for adding or deleting a roaming link.

In some embodiments, the first field is set to a first value, the first value is used for indicating that the first field is a reserved field, and the first frame is used for adding or deleting a local link; and/or the first field is set to a second value, the second value is used for indicating a roaming identifier of a target AP MLD, and the first frame is used for adding or deleting a roaming link.

In some embodiments, the first value is zero, and the second value is non-zero.

In some embodiments, the first field is an operation update type field;
where the operation update type field is used for indicating that the first frame is used for adding the first-type link, or the operation update type field is used for indicating that the first frame is used for deleting the first-type link, or the operation update type field is used for indicating that the first frame is used for adding the second-type link, or the operation update type field is used for indicating that the first frame is used for deleting the second-type link.

In some embodiments, the first frame is a multi-link operation update request frame.

In some embodiments, during roaming of the Non-AP MLD between different AP MLDs within the logical AP MLD, the Non-AP MLD performs link switching in a first manner or a second manner; where the first manner is a manner in which a target link is added first and then a source link is deleted, and the second manner is a manner in which a source link is deleted first and then a target link is added.

In some embodiments, during roaming of the Non-AP MLD between different AP MLDs within the logical AP MLD, a target link corresponding to a first non-access point station (Non-AP STA) in the Non-AP MLD is in the same frequency band as a source link corresponding to the first Non-AP STA in the Non-AP MLD.

In some embodiments, during roaming of the Non-AP MLD between different AP MLDs within the logical AP MLD, a target link corresponding to a first Non-AP STA in the Non-AP MLD is in a different frequency band from a source link corresponding to the first Non-AP STA in the Non-AP MLD.

In some embodiments, during roaming of the Non-AP MLD between different AP MLDs within the logical AP MLD, in response to that a source link and a target link that correspond to a first Non-AP STA in the Non-AP MLD are links in the same frequency band but different channels, and the source link and the target link that correspond to the first Non-AP STA are both in an enabled state, the first Non-AP STA performs following operations that:
in response to that the first Non-AP STA has stayed on the target link for more than first duration without obtaining a transmission opportunity, and a target access point (AP) corresponding to the target link has not initiated transmission with the first Non-AP STA, the first Non-AP STA switches from the target link to the source link; and/or
in response to that the first Non-AP STA has stayed on the source link for more than a second duration without obtaining a transmission opportunity, and a source AP corresponding to the source link has not initiated transmission with the first Non-AP STA, the first Non-AP STA switches from the source link to the target link.

In some embodiments, the first duration is a sum of duration of a first timer and a distributed interframe spacing (DIFS);
where the first timer is started when the first Non-AP STA switches to the target link, and the first timer is stopped when the first Non-AP STA receives a beacon frame within the first duration.

In some embodiments, the second duration is a sum of duration of a second timer and a DIFS;
where the second timer is started when the first Non-AP STA switches to the source link, and the second timer is stopped when the first Non-AP STA receives a beacon frame within the second duration.

In some embodiments, during roaming of the Non-AP MLD between different AP MLDs within the logical AP MLD, in response to that a source link and a target link that correspond to a first Non-AP STA in the Non-AP MLD are links in the same frequency band and the same channel, and the source link and the target link that correspond to the first Non-AP STA are both in an enabled state, the first Non-AP STA adjusts transmission power of an overlapping area; and after the transmission power is adjusted, an AP corresponding to the source link and an AP corresponding to the target link are capable of receiving an uplink signal of the first Non-AP STA. The overlapping area is an area capable of being covered by the AP corresponding to the source link and the AP corresponding to the target link.

In some embodiments, during roaming of the Non-AP MLD between different AP MLDs within the logical AP MLD, in response to that a source link and a target link that correspond to a first Non-AP STA in the Non-AP MLD are links in the same frequency band and the same channel, and the source link and the target link that correspond to the first Non-AP STA are both in an enabled state, an AP corresponding to the source link and an AP corresponding to the target link coordinate downlink transmission for the first Non-AP STA.

In some embodiments, the communication unit mentioned above may be a communication interface or a transceiver, or may be an input/output interface of a communication chip or a system on chip. The processing unit mentioned above may include one or more processors.

It should be understood that the AP MLD 400 according to the embodiments of the present disclosure may correspond to the AP MLD in the method embodiments of the present disclosure, and the above and other operations and/or functions of each unit in the AP MLD 400 are respectively for implementing the corresponding processes of the AP MLD in the method 200 illustrated in FIG. 10, which will not be repeated here for the sake of brevity.

FIG. 25 is a schematic structural diagram of a communication device 500 provided in embodiments of the present disclosure. The communication device 500 illustrated in FIG. 25 includes a processor 510, and the processor 510 can call a computer program from a memory and run the computer program to implement the methods in the embodiments of the present disclosure.

In some embodiments, as illustrated in FIG. 25, the communication device 500 may further include a memory 520. The processor 510 may call the computer program from the memory 520 and run the computer program to implement the methods in the embodiments of the present disclosure.

The memory 520 may be a separate device independent from the processor 510, or may be integrated into the processor 510.

In some embodiments, as illustrated in FIG. 25, the communication device 500 may further include a transceiver 530, and the processor 510 may control the transceiver 530 to communicate with other devices, specifically, may transmit information or data to other devices, or receive information or data transmitted by other devices.

The transceiver 530 may include a transmitter and a receiver. The transceiver 530 may further include antenna(s), and the number of antennas may be one or more.

In some embodiments, the processor 510 may implement functions of a processing unit in the Non-AP MLD, or the processor 510 may implement functions of a processing unit in the AP MLD, which will not be repeated here for the sake of brevity.

In some embodiments, the transceiver 530 may implement functions of the communication unit in the Non-AP MLD, which will not be repeated here for the sake of brevity.

In some embodiments, the transceiver 530 may implement functions of the communication unit in the AP MLD, which will not be repeated here for the sake of brevity.

In some embodiments, the communication device 500 may specifically be the AP MLD in the embodiments of the present disclosure, and the communication device 500 may implement corresponding processes implemented by the AP MLD in the methods in the embodiments of the present disclosure, which will not be repeated here for the sake of brevity.

In some embodiments, the communication device 500 may specifically be the Non-AP MLD in the embodiments of the present disclosure, and the communication device 500 may implement corresponding processes implemented by the Non-AP MLD in the methods in the embodiments of the present disclosure, which will not be repeated here for the sake of brevity.

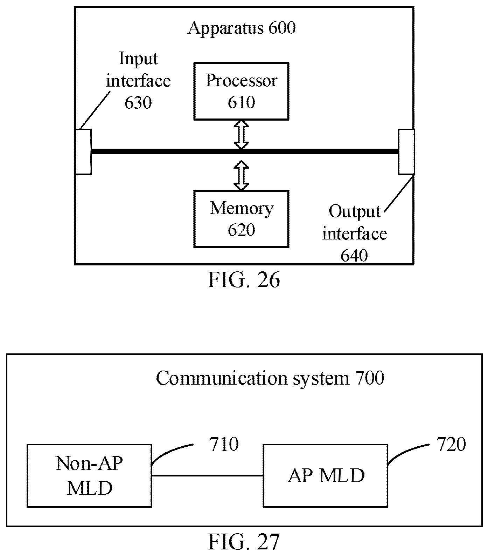

FIG. 26 is a schematic structural diagram of an apparatus in embodiments of the present disclosure. The apparatus 600 illustrated in FIG. 26 includes a processor 610, and the processor 610 can call a computer program from a memory and run the computer program to implement the methods in the embodiments of the present disclosure.

In some embodiments, as illustrated in FIG. 26, the apparatus 600 may further include a memory 620. The processor 610 may call the computer program from the memory 620 and run the computer program to implement the methods in the embodiments of the present disclosure.

The memory 620 may be a separate device independent from the processor 610, or may be integrated into the processor 610.

In some embodiments, the processor 610 may implement functions of a processing unit in the Non-AP MLD, or the processor 610 may implement functions of a processing unit in the AP MLD, which will not be repeated here for the sake of brevity.

In some embodiments, the apparatus 600 may further include an input interface 630. The processor 610 may control the input interface 630 to communicate with other devices or chips, and specifically, may obtain information or data transmitted by other devices or chips. Optionally, the processor 610 may be located inside or outside a chip.

In some embodiments, the input interface 630 may implement functions of the communication unit in the Non-AP MLD, or the input interface 630 may implement functions of the communication unit in the AP MLD.

In some embodiments, the apparatus 600 may further include an output interface 640. The processor 610 may control the output interface 640 to communicate with other devices or chips, and specifically, may output information or data to other devices or chips. Optionally, the processor 610 may be located inside or outside a chip.

In some embodiments, the output interface 640 may implement functions of the communication unit in the Non-AP MLD, or the output interface 640 may implement functions of the communication unit in the AP MLD.

In some embodiments, the apparatus may be applied to the AP MLD in the embodiments of the present disclosure, and the apparatus may implement corresponding processes implemented by the AP MLD in the methods in the embodiments of the present disclosure, which will not be repeated here for the sake of brevity.

In some embodiments, the apparatus may be applied to the Non-AP MLD in the embodiments of the present disclosure, and the apparatus may implement corresponding processes implemented by the Non-AP MLD in the methods in the embodiments of the present disclosure, which will not be repeated here for the sake of brevity.

In some embodiments, the apparatus mentioned in the embodiments of the present disclosure may also be a chip. For example, the chip may be a system-on-chip, a system chip, a chip system, or a system-on-chip chip.

FIG. 27 is a schematic block diagram of a communication system 700 provided in embodiments of the present disclosure. As illustrated in FIG. 27, the communication system 700 includes a Non-AP MLD 710 and an AP MLD 720.

The Non-AP MLD 710 may be configured to implement the corresponding functions implemented by the Non-AP MLD in the above methods, and the AP MLD 720 may be configured to implement the corresponding functions implemented by the AP MLD in the above methods, which will not be repeated here for the sake of brevity.

It should be understood that the processor in the embodiments of the present disclosure may be an integrated circuit chip with a capability for processing signals. In an implementation process, various steps of the method embodiments described above may be completed through an integrated logic circuit of hardware in the processor or instructions in a form of software. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. The processor may implement or perform various methods, steps, and logic block diagrams disclosed in the embodiments of the present disclosure. The general-purpose processor may be a microprocessor, or the processor may be any conventional processor. The steps of the methods disclosed in combination with the embodiments of the present disclosure may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory, and the processor reads information in the memory and completes the steps of the above methods in combination with hardware of the processor.

It will be appreciated that the memory in the embodiments of the present disclosure may be a volatile memory or a non-volatile memory, or may include both volatile and non-volatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), which is used as an external cache. As an example but not limitation, a variety of forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct memory bus random access memory (direct rambus RAM, DR RAM). It should be noted that the memories in the systems and methods described herein are intended to include, but are not limited to, these and any other suitable types of memories.

It should be understood that the above memories are exemplary but are not limited illustration. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (direct rambus RAM, DR RAM). That is, the memories in the embodiments of the present disclosure are intended to include, but are not limited to, these and any other suitable types of memories.

Embodiments of the present disclosure further provide a computer-readable storage medium for storing a computer program.

In some embodiments, the computer-readable storage medium may be applied to the AP MLD in the embodiments of the present disclosure, and the computer program enables a computer to perform the corresponding processes implemented by the AP MLD in the various methods in the embodiments of the present disclosure, which will not be repeated here for the sake of brevity.

In some embodiments, the computer-readable storage medium may be applied to the Non-AP MLD in the embodiments of the present disclosure, and the computer program enables a computer to perform the corresponding processes implemented by the Non-AP MLD in the various methods in the embodiments of the present disclosure, which will not be repeated here for the sake of brevity.

Embodiments of the present disclosure further provide a computer program product, which includes computer program instructions.

In some embodiments, the computer program product may be applied to the AP MLD in the embodiments of the present disclosure, and the computer program instructions enable a computer to perform the corresponding processes implemented by the AP MLD in the various methods in the embodiments of the present disclosure, which will not be repeated here for the sake of brevity.

In some embodiments, the computer program product may be applied to the Non-AP MLD in the embodiments of the present disclosure, and the computer program instructions enable a computer to perform the corresponding processes implemented by the Non-AP MLD in the various methods in the embodiments of the present disclosure, which will not be repeated here for the sake of brevity.

Embodiments of the present disclosure further provide a computer program.

In some embodiments, the computer program may be applied to the AP MLD in the embodiments of the present disclosure. The computer program, when run on a computer, enables the computer to perform the corresponding processes implemented by the AP MLD in the various methods in the embodiments of the present disclosure, which will not be repeated here for the sake of brevity.

In some embodiments, the computer program may be applied to the Non-AP MLD in the embodiments of the present disclosure. The computer program, when run on a computer, enables the computer to perform the corresponding processes implemented by the Non-AP MLD in the various methods in the embodiments of the present disclosure, which will not be repeated here for the sake of brevity.

Those of ordinary skills in the art will appreciate that units and algorithm steps of various examples described in combination with the embodiments disclosed herein can be implemented in electronic hardware, or in a combination of computer software and electronic hardware. Whether these functions are performed in a form of hardware or software depends on a specific application and design constraints of a technical solution. Those skilled in the art may use different methods to implement the described functions for each specific application, but such implementation should not be considered to be beyond the scope of the present disclosure.

It may be clearly understood by those skilled in the art that, for convenience and brevity of the description, specific operating processes of the system, devices and units described above may refer to the corresponding processes in the above method embodiments, which will not be repeated here.

In several embodiments provided in the present disclosure, it should be understood that the disclosed system, devices and methods may be implemented in other ways. For example, the device embodiments described above are only schematic. For example, the division of the units is only division of logical functions, and there may be other division ways in the actual implementation. For example, a plurality of units or components may be combined or integrated into another system, or some features may be ignored or not performed. In addition, coupling or direct coupling or communication connection between each other, which is illustrated or discussed, may be indirect coupling or communication connection via some interfaces, apparatuses or units, and may be electrical, mechanical, or in other forms.

The units described as separate components may be or may not be physically separated, and the components shown as units may be or may not be physical units (that is, they may be located at one place, or may be distributed onto a plurality of network units). Some or all of the units may be selected according to actual needs to implement the purpose of the schemes of the embodiments.

In addition, various functional units in various embodiments of the present disclosure may be integrated into one processing unit, or various units may exist physically alone, or two or more units may be integrated into one unit.

The functions, if implemented in a form of software functional units and sold or used as an independent product, may be stored in a computer-readable storage medium. With such understanding, the technical solutions of the present disclosure may be embodied in a form of a software product in essence, or a part of the technical solutions that contributes to the prior art or a part of the technical solutions may be embodied in the form of the software product. The computer software product is stored in a storage medium and includes several instructions for enabling a computer device (which may be a personal computer, a server, or a network device) to perform all or some of the steps of the methods described in various embodiments of the present disclosure. The aforementioned storage medium includes a U disk, a mobile hard disk, a read-only memory (ROM), a random access memory (RAM), a magnetic disk, an optical disk, or any other medium capable of storing program codes.

The foregoing descriptions are merely specific implementations of the present disclosure, but the protection scope of the present disclosure is not limited thereto. Variations or replacements that any person skilled in the art could readily conceive of within the technical scope disclosed in the present application shall be included in the protection scope of the present application. Therefore, the protection scope of the present disclosure shall be subject to the protection scope of claims.

## Claims

1. A wireless communication method, applied to a non-access point multi-link device (Non-AP MLD), wherein the Non-AP MLD roams between different access point multi-link devices (AP MLDs) within a logical AP MLD, and the method comprises:
transmitting, by the Non-AP MLD, a first frame;
wherein the first frame comprises a first field, and the first field is used for indicating that the first frame is used for adding or deleting a first-type link, or the first field is used for indicating that the first frame is used for adding or deleting a second-type link.

2. The method according to claim 1, wherein
the first field is a roaming identifier present field of a target AP MLD, wherein the roaming identifier present field of the target AP MLD is used for indicating whether a roaming identifier field of the target AP MLD exists in a first element of the first frame, and the roaming identifier field of the target AP MLD is used for indicating a roaming identifier of the target AP MLD;
wherein in a case where the roaming identifier present field of the target AP MLD is used for indicating that the roaming identifier field of the target AP MLD does not exist in the first element of the first frame, the first frame is used for adding or deleting the first-type link; and/or in a case where the roaming identifier present field of the target AP MLD is used for indicating that the roaming identifier field of the target AP MLD exists in the first element of the first frame, the first frame is used for adding or deleting the second-type link.

3. The method according to claim 2, wherein
the first element is a reconfiguration multi-link element, or the first element is a basic multi-link element.

4. The method according to claim 3, wherein
in a case where the first element is the reconfiguration multi-link element, the first frame is a multi-link operation update request frame.

5. The method according to claim 3, wherein
in a case where the first element is the basic multi-link element, the first frame is a frame used for adding or deleting a roaming link.

6. The method according to claim 1, wherein
the first field is set to a first value, the first value is used for indicating that the first field is a reserved field, and the first frame is used for adding or deleting a local link; and/or the first field is set to a second value, the second value is used for indicating a roaming identifier of a target AP MLD, and the first frame is used for adding or deleting a roaming link.

7. The method according to claim 6, wherein
the first value is zero, and the second value is non-zero.

8. The method according to claim 1, wherein
the first field is an operation update type field;
wherein the operation update type field is used for indicating that the first frame is used for adding the first-type link, or the operation update type field is used for indicating that the first frame is used for deleting the first-type link, or the operation update type field is used for indicating that the first frame is used for adding the second-type link, or the operation update type field is used for indicating that the first frame is used for deleting the second-type link.

9. The method according to any one of claims 6 to 8, wherein the first frame is a multi-link operation update request frame.

10. The method according to any one of claims 1 to 9, wherein
during roaming of the Non-AP MLD between different AP MLDs within the logical AP MLD, the Non-AP MLD performs link switching in a first manner or a second manner, wherein the first manner is a manner in which a target link is added first and then a source link is deleted, and the second manner is a manner in which a source link is deleted first and then a target link is added.

11. The method according to any one of claims 1 to 10, wherein during roaming of the Non-AP MLD between different AP MLDs within the logical AP MLD, a target link corresponding to a first non-access point station (Non-AP STA) in the Non-AP MLD is in a same frequency band as a source link corresponding to the first Non-AP STA in the Non-AP MLD.

12. The method according to any one of claims 1 to 10, wherein during roaming of the Non-AP MLD between different AP MLDs in the logical AP MLD, a target link corresponding to a first non-access point station (Non-AP STA) in the Non-AP MLD is in a different frequency band from a source link corresponding to the first Non-AP STA in the Non-AP MLD.

13. The method according to any one of claims 1 to 12, wherein
during roaming of the Non-AP MLD between different AP MLDs within the logical AP MLD, in response to that a source link and a target link that correspond to a first Non-AP STA in the Non-AP MLD are links in a same frequency band but different channels, and the source link and the target link that correspond to the first Non-AP STA are both in an enabled state, the first Non-AP STA performs following operations that:
in response to that the first Non-AP STA has stayed on the target link for more than a first duration without obtaining a transmission opportunity, and a target access point (AP) corresponding to the target link has not initiated transmission with the first Non-AP STA, the first Non-AP STA switches from the target link to the source link; and/or
in response to that the first Non-AP STA has stayed on the source link for more than a second duration without obtaining a transmission opportunity, and a source AP corresponding to the source link has not initiated transmission with the first Non-AP STA, the first Non-AP STA switches from the source link to the target link.

14. The method according to claim 13, wherein
the first duration is a sum of duration of a first timer and a distributed interframe space (DIFS);
wherein the first timer is started when the first Non-AP STA switches to the target link, and is stopped when the first Non-AP STA receives a beacon frame within the first duration.

15. The method according to claim 13, wherein
the second duration is a sum of duration of a second timer and a distributed interframe space (DIFS);
wherein the second timer is started when the first Non-AP STA switches to the source link, and is stopped when the first Non-AP STA receives a beacon frame within the second duration.

16. The method according to any one of claims 1 to 12, wherein
during roaming of the Non-AP MLD between different AP MLDs within the logical AP MLD, in response to that a source link and a target link that correspond to a first Non-AP STA in the Non-AP MLD are links in a same frequency band and a same channel, and the source link and the target link that correspond to the first Non-AP STA are both in an enabled state, the first Non-AP STA adjusts transmission power of an overlapping area; and after the transmission power is adjusted, an AP corresponding to the source link and an AP corresponding to the target link are capable of receiving an uplink signal of the first Non-AP STA, wherein the overlapping area is an area capable of being covered by the AP corresponding to the source link and the AP corresponding to the target link.

17. The method according to any one of claims 1 to 12, wherein
during roaming of the Non-AP MLD between different AP MLDs within the logical AP MLD, in response to that a source link and a target link that correspond to a first Non-AP STA in the Non-AP MLD are links in a same frequency band and a same channel, and the source link and the target link that correspond to the first Non-AP STA are both in an enabled state, an AP corresponding to the source link and an AP corresponding to the target link coordinate downlink transmission for the first Non-AP STA.

18. A wireless communication method, applied to an access point multi-link device (AP MLD), wherein the AP MLD belongs to a logical AP MLD, and the method comprises:
receiving, by the AP MLD, a first frame transmitted by a non-access point multi-link device (Non-AP MLD);
wherein the Non-AP MLD roams between different AP MLDs within the logical AP MLD; and
the first frame comprises a first field, and the first field is used for indicating that the first frame is used for adding or deleting a first-type link, or the first field is used for indicating that the first frame is used for adding or deleting a second-type link.

19. The method according to claim 18, wherein
the first field is a roaming identifier present field of a target AP MLD, wherein the roaming identifier present field of the target AP MLD is used for indicating whether a roaming identifier field of the target AP MLD exists in a first element of the first frame, and the roaming identifier field of the target AP MLD is used for indicating a roaming identifier of the target AP MLD;
wherein in a case where the roaming identifier present field of the target AP MLD is used for indicating that the roaming identifier field of the target AP MLD does not exist in the first element of the first frame, the first frame is used for adding or deleting the first-type link; and/or in a case where the roaming identifier present field of the target AP MLD is used for indicating that the roaming identifier field of the target AP MLD exists in the first element of the first frame, the first frame is used for adding or deleting the second-type link.

20. The method according to claim 19, wherein
the first element is a reconfiguration multi-link element, or the first element is a basic multi-link element.

21. The method according to claim 20, wherein
in a case where the first element is the reconfiguration multi-link element, the first frame is a multi-link operation update request frame.

22. The method according to claim 20, wherein
in a case where the first element is the basic multi-link element, the first frame is a frame used for adding or deleting a roaming link.

23. The method according to claim 18, wherein
the first field is set to a first value, the first value is used for indicating that the first field is a reserved field, and the first frame is used for adding or deleting a local link; and/or the first field is set to a second value, the second value is used for indicating a roaming identifier of a target AP MLD, and the first frame is used for adding or deleting a roaming link.

24. The method according to claim 23, wherein
the first value is zero, and the second value is non-zero.

25. The method according to claim 18, wherein
the first field is an operation update type field;
wherein the operation update type field is used for indicating that the first frame is used for adding the first-type link, or the operation update type field is used for indicating that the first frame is used for deleting the first-type link, or the operation update type field is used for indicating that the first frame is used for adding the second-type link, or the operation update type field is used for indicating that the first frame is used for deleting the second-type link.

26. The method according to any one of claims 23 to 25, wherein the first frame is a multi-link operation update request frame.

27. The method according to any one of claims 18 to 26, wherein
during roaming of the Non-AP MLD between different AP MLDs within the logical AP MLD, the Non-AP MLD performs link switching in a first manner or a second manner, wherein the first manner is a manner in which a target link is added first and then a source link is deleted, and the second manner is a manner in which a source link is deleted first and then a target link is added.

28. The method according to any one of claims 18 to 27, wherein during roaming of the Non-AP MLD between different AP MLDs within the logical AP MLD, a target link corresponding to a first non-access point station (Non-AP STA) in the Non-AP MLD is in a same frequency band as a source link corresponding to the first Non-AP STA in the Non-AP MLD.

29. The method according to any one of claims 18 to 27, wherein during roaming of the Non-AP MLD between different AP MLDs in the logical AP MLD, a target link corresponding to a first non-access point station (Non-AP STA) in the Non-AP MLD is in a different frequency band from a source link corresponding to the first Non-AP STA in the Non-AP MLD.

30. The method according to any one of claims 18 to 29, wherein
during roaming of the Non-AP MLD between different AP MLDs within the logical AP MLD, in response to that a source link and a target link that correspond to a first Non-AP STA in the Non-AP MLD are links in a same frequency band but different channels, and the source link and the target link that correspond to the first Non-AP STA are both in an enabled state, the first Non-AP STA performs following operations that:
in response to that the first Non-AP STA has stayed on the target link for more than a first duration without obtaining a transmission opportunity, and a target access point (AP) corresponding to the target link has not initiated transmission with the first Non-AP STA, the first Non-AP STA switches from the target link to the source link; and/or
in response to that the first Non-AP STA has stayed on the source link for more than a second duration without obtaining a transmission opportunity, and a source AP corresponding to the source link has not initiated transmission with the first Non-AP STA, the first Non-AP STA switches from the source link to the target link.

31. The method according to claim 30, wherein
the first duration is a sum of duration of a first timer and a distributed interframe space (DIFS);
wherein the first timer is started when the first Non-AP STA switches to the target link, and is stopped when the first Non-AP STA receives a beacon frame within the first duration.

32. The method according to claim 30, wherein
the second duration is a sum of duration of a second timer and a distributed interframe space (DIFS);
wherein the second timer is started when the first Non-AP STA switches to the source link, and is stopped when the first Non-AP STA receives a beacon frame within the second duration.

33. The method according to any one of claims 18 to 29, wherein
during roaming of the Non-AP MLD between different AP MLDs within the logical AP MLD, in response to that a source link and a target link that correspond to a first Non-AP STA in the Non-AP MLD are links in a same frequency band and a same channel, and the source link and the target link that correspond to the first Non-AP STA are both in an enabled state, the first Non-AP STA adjusts transmission power of an overlapping area; and after the transmission power is adjusted, an AP corresponding to the source link and an AP corresponding to the target link are capable of receiving an uplink signal of the first Non-AP STA, wherein the overlapping area is an area capable of being covered by the AP corresponding to the source link and the AP corresponding to the target link.

34. The method according to any one of claims 18 to 29, wherein
during roaming of the Non-AP MLD between different AP MLDs within the logical AP MLD, in response to that a source link and a target link that correspond to a first Non-AP STA in the Non-AP MLD are links in a same frequency band and a same channel, and the source link and the target link that correspond to the first Non-AP STA are both in an enabled state, an AP corresponding to the source link and an AP corresponding to the target link coordinate downlink transmission for the first Non-AP STA.

35. A non-access point multi-link device (Non-AP MLD), wherein the Non-AP MLD roams between different access point multi-link devices (AP MLDs) within a logical AP MLD, and the Non-AP MLD comprises:
a communication unit, configured to transmit a first frame;
wherein the first frame comprises a first field, and the first field is used for indicating that the first frame is used for adding or deleting a first-type link, or the first field is used for indicating that the first frame is used for adding or deleting a second-type link.

36. An access point multi-link device (AP MLD), wherein the AP MLD belongs to a logical AP MLD, and the AP MLD comprises:
a communication unit, configured to receive a first frame transmitted by a non-access point multi-link device (Non-AP MLD);
wherein the Non-AP MLD roams between different AP MLDs within the logical AP MLD; and
the first frame comprises a first field, and the first field is used for indicating that the first frame is used for adding or deleting a first-type link, or the first field is used for indicating that the first frame is used for adding or deleting a second-type link.

37. A Non-AP MLD, comprising: a processor and a memory, wherein the memory is configured to store a computer program, and the processor is configured to call the computer program stored in the memory and run the computer program, to enable the Non-AP MLD to perform the method according to any one of claims 1 to 17.

38. An AP MLD, comprising: a processor and a memory, wherein the memory is configured to store a computer program, and the processor is configured to call the computer program stored in the memory and run the computer program, to enable the AP MLD to perform the method according to any one of claims 18 to 34.

39. A chip, comprising: a processor, configured to call a computer program from a memory and run the computer program, to enable a device equipped with the chip to perform the method according to any one of claims 1 to 17.

40. A chip, comprising: a processor, configured to call a computer program from a memory and run the computer program, to enable a device equipped with the chip to perform the method according to any one of claims 18 to 34.

41. A computer-readable storage medium, configured to store a computer program, wherein when the computer program is performed, the method according to any one of claims 1 to 17 is implemented.

42. A computer-readable storage medium, configured to store a computer program, wherein when the computer program is performed, the method according to any one of claims 18 to 34 is implemented.

43. A computer program product, comprising computer program instructions, wherein when the computer program instructions are performed, the method according to any one of claims 1 to 17 is implemented.

44. A computer program product, comprising computer program instructions, wherein when the computer program instructions are performed, the method according to any one of claims 18 to 34 is implemented.

45. A computer program, wherein when the computer program is performed, the method according to any one of claims 1 to 17 is implemented.

46. A computer program, wherein when the computer program is performed, the method according to any one of claims 18 to 34 is implemented.
